# EUROPEAN PATENT SPECIFICATION

(11) **EP 3 456 130 B1**
(45) Date of publication and mention of the grant of the patent: **09.12.2020**
(21) Application number: 17724683.2
(22) Date of filing: 05.05.2017
(51) Int. Cl.: H04W 72/12

(54) **BUFFER STATUS REPORTING IN A WIRELESS LOCAL AREA NETWORK (WLAN)**
PUFFERSTATUSMELDUNG IN EINEM DRAHTLOSEN LOKALEN NETZWERK (WLAN)
RAPPORT D'ÉTAT DE TAMPON DANS UN RÉSEAU LOCAL SANS FIL (WLAN)

(30) Priority: 11.05.2016 US 201662335048 P; 31.05.2016 US 201662343768 P; 04.05.2017 US 201715587275
(43) Date of publication of application: 20.03.2019
(73) Proprietor: Qualcomm Incorporated, San Diego, CA 92121-1714 (US)
(72) Inventor: SHIRALI, Kedar Durgadas, San Diego, California 92121-1714 (US); BANERJEA, Raja, San Diego, California 92121-1714 (US); ASTERJADHI, Alfred, San Diego, California 92121-1714 (US); KAKANI, Naveen Kumar, San Diego, California 92121-1714 (US)
(74) Representative: Bardehle Pagenberg Partnerschaft mbB Patentanwälte Rechtsanwälte
(86) International application number: PCT/US2017/031260
(87) International publication number: WO 2017/196658

(56) References cited:
- EP-A2- 1 511 245
- WO-A1-2016/060448
- US-A1- 2008 232 260
- US-A1- 2010 135 166
- US-A1- 2013 343 293

## Description

### TECHNICAL FIELD

This disclosure relates to allocating bandwidth resources in wireless networks.

### DESCRIPTION OF THE RELATED TECHNOLOGY

A wireless local area network (WLAN) may be formed by one or more access points (APs) that provide a shared wireless medium for use by a number of client devices or stations (STAs). Each AP, which may correspond to a Basic Service Set (BSS), may periodically broadcast beacon frames to enable any STAs within wireless range of the AP to establish or maintain a communication link with the WLAN. WLANs that operate in accordance with the IEEE 802.11 family of standards are commonly referred to as Wi-Fi® networks.

The IEEE 802.11ax standards may introduce multiple access mechanisms, such as an orthogonal frequency division multiple access (OFDMA) mechanism, to allow multiple STAs to transmit or receive data on a shared wireless medium at the same time. For example, in a wireless network using OFDMA, the available frequency spectrum may be divided into a plurality of resource units (RUs) each including a number of different frequency subcarriers, and different RUs may be allocated or assigned to different wireless devices at a given point in time. In this manner, multiple wireless devices may concurrently transmit data on the wireless medium using their assigned RU or frequency subcarriers.

More specifically, an AP may allocate a unique set of RUs to each of a plurality of STAs to allow the STAs to concurrently transmit uplink (UL) data to the AP. Because each of the STAs may have different amounts of UL data to transmit to the AP (or no UL data), it would be desirable if the AP were aware of how much UL data each of the STAs has to transmit, for example, so that the AP may allocate RUs to the STAs accordingly. US2008/0232260 relates to a resource allocation requesting method and a packet scheduling method for uplink packet traffic in a mobile communication system, and an apparatus of the packet scheduling method. For efficient scheduling for the uplink traffic, scheduling is performed according to characteristics of traffic between a base station and user equipment (UE). Particularly, when the traffic generates a variable size packet on a periodic basis, the traffic is classified into first traffic that generates a completely variable size packet on a periodic basis and second traffic that generates a quasi-variable size packet on a periodic basis. In addition, the UE requests resource allocation in a different form from the base station depending on the type of traffic, and the base station performs scheduling according to the resource allocation request. Therefore, the UE requests resource allocation in accordance with traffic characteristics and the base station performs scheduling according to the traffic characteristics so that optimal uplink scheduling can be performed.

### SUMMARY

The invention is defined by the independent claims. The embodiments are defined by the dependent claims. The underlying problem of the present invention is solved by the subject-matter of the independent claims.

The systems, methods and devices of this disclosure each have several innovative aspects, no single one of which is solely responsible for the desirable attributes disclosed herein.

One innovative aspect of the subject matter of this disclosure is implemented in a method of allocating resources to a first wireless station (STA) for uplink (UL) transmissions. The method includes steps of receiving, from the first STA, buffer status information indicating one or more access categories or traffic identifiers (TIDs) for which the first STA has queued uplink (UL) data and an amount of queued UL data associated with the one or more access categories or TIDs, determining a resource unit (RU) allocation scheme based at least in part on the buffer status information received from the first STA, allocating a first set of RUs to the first STA in accordance with the RU allocation scheme, and receiving at least some of the queued UL data from the first STA via the first set of RUs.

The buffer status information indicate a priority level of the queued UL data. The priority level is based at least in part on quality of service (QoS) parameters, delay requirements, one or more access categories associated with the queued UL data, or one or more TIDs associated with the queued UL data. Thus, the RU allocation scheme is based on the priority level of the queued UL data in the first STA.

The buffer status information include a bitmap and one or more buffer state fields. The bitmap identifies the one or more access categories, and the one or more buffer state fields indicate an amount of queued UL data belonging to at least one of the identified access categories. The buffer status information further include a quantization value, and the information provided in the one or more buffer state fields are quantized based on the quantization value.

The one or more buffer state fields include a respective buffer state field for each of the identified access categories. The one or more buffer state fields include a first buffer state field indicating an amount of queued UL data belonging to a highest-priority access category among the identified access categories. For example, the highest-priority access category may be determined by the first STA. In some aspects, the one or more buffer state fields may include a second buffer state field indicating an amount of queued UL data belonging to any access categories other than the highest-priority access category. In some other aspects, the one or more buffer state fields may include a second buffer state field that indicates an aggregate amount of queued UL data in the first STA.

In some implementations, the method may further include steps of receiving, from a second STA, buffer status information indicating one or more access categories or TIDs for which a second STA has queued UL data and an amount of queued UL data associated with the one or more access categories or TIDs of the second STA, allocating a second set of RUs to the second STA in accordance with the RU allocation scheme, and receiving at least some of the queued UL data from the second STA via the second set of RUs. Thus, the RU allocation scheme may be based on the buffer status information received from the first STA and the second STA.

In some implementations, the method may further include steps of transmitting a buffer status request, to the first STA, requesting the buffer status information. For example, at least one of the buffer status request or the buffer status information may be provided in a high-efficiency aggregate control (HE A-Control) field of a data frame.

Another innovative aspect of the subject matter described in this disclosure is implemented in an access point (AP). The AP includes one or more processors and a memory storing instructions that, when executed by the one or more processors, cause the AP to receive, from a STA, buffer status information indicating one or more access categories or TIDs for which the STA has queued UL data and an amount of queued UL data associated with the one or more access categories or TIDs, determine an RU allocation scheme based at least in part on the buffer status information received from the STA, allocate a first set of RUs to the STA in accordance with the RU allocation scheme, and receive at least some of the queued UL data from the STA via the first set of RUs.

The buffer status information include a bitmap and one or more buffer state fields. The bitmap identifies the one or more access categories, and the one or more buffer state fields indicate an amount of queued UL data belonging to at least one of the identified access categories. The buffer status information further include a quantization value, and the information provided in the one or more buffer state fields are quantized based on the quantization value.

The one or more buffer state fields include a respective buffer state field for each of the identified access categories. The one or more buffer state fields include a first buffer state field indicating an amount of queued UL data belonging to a highest-priority access category among the identified access categories. In some aspects, the one or more buffer state fields may include a second buffer state field indicating an amount of queued UL data belonging to any access categories other than the highest-priority access category. In some other aspects, the one or more buffer state fields may include a second buffer state field that indicates an aggregate amount of queued UL data in the STA.

In some implementations, execution of the instructions may further cause the AP to transmit a buffer status request, to the STA, requesting the buffer status information. For example, at least one of the buffer status request or the buffer status information may be provided in an HE A-Control field of a data frame.

Another innovative aspect of the subject matter described in this disclosure is implemented in a non-transitory computer-readable medium. The non-transitory computer readable medium includes instructions that, when executed by one or more processors of an AP, cause the AP to receive, from a STA, buffer status information indicating one or more access categories or TIDs for which the STA has queued UL data and an amount of queued UL data associated with the one or more access categories or TIDs, determine an RU allocation scheme based at least in part on the buffer status information received from the STA, allocate a first set of RUs to the STA in accordance with the RU allocation scheme, and receive at least some of the queued UL data from the STA via the first set of RUs.

The buffer status information include a bitmap and one or more buffer state fields. The bitmap identifies the one or more access categories, and the one or more buffer state fields indicate an amount of queued UL data belonging to at least one of the identified access categories. The buffer status information further include a quantization value, and the information provided in the one or more buffer state fields are quantized based on the quantization value.

In some implementations, execution of the instructions may further cause the AP to transmit a buffer status request, to the STA, requesting the buffer status information. For example, at least one of the buffer status request or the buffer status information may be provided in an HE A-Control field of a data frame.

Details of one or more implementations of the subject matter described in this disclosure are set forth in the accompanying drawings and the description herein. Other features, aspects, and advantages will become apparent from the description, the drawings and the claims. Note that the relative dimensions of the following figures may not be drawn to scale.

### BRIEF DESCRIPTION OF THE DRAWINGS

Figure 1 shows a block diagram of an example wireless system.
Figure 2 shows a block diagram of an example wireless station (STA).
Figure 3 shows a block diagram of an example access point (AP).
Figure 4 depicts an example data queuing system that may be implemented within the STA shown in Figure 2.
Figures 5A-5C show example subcarrier allocation diagrams for a 20 MHz bandwidth, a 40 MHz bandwidth, and an 80 MHz bandwidth, respectively, according to the IEEE 802.11ax standards.
Figure 6 shows a sequence diagram depicting an example operation for selecting the size and location of resource units (RUs) to be allocated to a number of STAs.
Figures 7A-7D show example buffer status reports.
Figure 8 shows a flowchart depicting an example operation for allocating RUs to a STA based, at least in part, on a buffer status report received from the STA.
Figure 9 shows a sequence diagram depicting an example operation for requesting buffer status reports from a number of STAs.
Figure 10A shows an example trigger frame that may be used for requesting buffer status reports from a STA.
Figure 10B shows a more detailed example of the Common Info field shown in Figure 10A.
Figure 10C shows a more detailed example of the Per User Info field shown in Figure 10A.
Figure 11A shows an example Aggregated Control (A-Control) subfield of a high-efficiency HE variant high-throughput (HT) control frame.
Figure 11B shows a table depicting example Control ID values and corresponding indications of information type stored in the Control Information subfield shown in Figure 11A.
Figure 11C shows an example buffer status report that may be provided within a Control ID subfield.
Figure 11D shows a table depicting an example mapping between an access category indicator (ACI) bitmap and access categories.
Figure 11E shows a table depicting an example encoding of Delta Traffic Identifier (TID) subfield values.
Figure 12 shows an example high-efficiency (HE) Capabilities element.
Figure 13 shows a flowchart depicting an example operation for requesting buffer status information from a STA.

Like reference numbers and designations in the various drawings indicate like elements.

### DETAILED DESCRIPTION

The following description is directed to certain implementations for the purposes of describing the innovative aspects of this disclosure. However, a person having ordinary skill in the art will readily recognize that the teachings herein can be applied in a multitude of different ways. The described implementations may be implemented in any device, system or network that is capable of transmitting and receiving RF signals according to any of the IEEE 16.11 standards, or any of the IEEE 802.11 standards, the Bluetooth® standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), AMPS, or other known signals that are used to communicate within a wireless, cellular or internet of things (IOT) network, such as a system utilizing 3G, 4G or 5G, or further implementations thereof, technology.

An AP may allocate a unique set of RUs to each of a plurality of STAs to allow the STAs to concurrently transmit uplink (UL) data to the AP. Because each of the STAs may have different amounts of UL data to transmit to the AP (or no UL data), it may be inefficient to allocate the same amount of uplink resources (such as the same RU sizes) to all STAs associated with the AP. Moreover, in some wireless networks, data may be selected for transmission over a shared medium according to priority levels, for example, so that higher priority data (such as voice data) may be allocated higher transmission priorities than lower priority data (such as emails). For example, when random channel access mechanisms are used to content for medium access, data of different priority levels may be assigned different ranges of back-off numbers so that higher priority data is more likely to win a given medium access contention period than lower priority data (such as by assigning lower back-off numbers to higher priority data and assigning higher back-off numbers to lower priority data). The different ranges of back-off numbers may be allocated to different priority levels of data by classifying data into access categories, and then providing a different range of back-off numbers to each access category (AC).

In some implementations, data may be assigned to one of four access categories (AC0-AC3): the highest priority data (such as voice data) may be assigned to the first access category (AC0); the second highest priority data (such as video data) may be assigned to the second access category (AC1); the third highest priority data (such as data associated with a "best effort" QoS) may be assigned to the third access category (AC2); and the lowest priority data (such as background data) may be assigned to the fourth access category (AC3). Although described herein with respect to four access categories AC0-AC3, the implementations are applicable to systems that may include other numbers of access categories or priority levels. More specifically, in some implementations, the access categories AC0-AC3 described herein may correspond to the access categories AC_VO, AC_VI, AC_BE, and AC_BK, respectively, associated with one or more of the IEEE 802.11 standards.

In some aspects, traffic flows transmitted from a STA may be classified based on a traffic identifier (TID). The TID indicates the priority level of the data, and may thus be mapped to a corresponding access category. By classifying uplink data according to its TID, the STA may aggregate data of the same priority level in a common set of AC queues. The aggregated data may be transmitted over the wireless medium as aggregated data frames such as, for example, aggregated MAC protocol data units (A-MPDUs) or aggregated MAC service data units (A-MSDUs). Similarly, traffic flows transmitted from an AP may be classified based on a TID and a destination address (DA). The destination address (DA) indicates to which STA the data is to be transmitted. By classifying downlink data according to its TID and DA, the AP may aggregate data of the same priority level in a common set of AC queues. The aggregated data may be transmitted over the wireless medium as A-MPDUs or A-MSDUs.

Aspects of this disclosure may enable an AP to allocate uplink resources (RUs) to a given STA based, at least in part, on the amount of UL data that the given STA has queued for transmission to the AP and a priority level of the UL data. For example, each STA associated with the AP may transmit a buffer status report (BSR) indicating an amount of queued UL data buffered for transmission in the respective STA and one or more access categories or TIDs to which the queued UL data belongs. In some implementations, the BSR may include a bitmap identifying the access categories, and one or more buffer state fields indicating an amount of queued UL data belonging to at least one of the identified access categories. In some aspects, the information provided in the buffer state fields may be scaled by a scaling factor (also referred to as a "quantization value"). In some other aspects, the BSR may include a first buffer state field indicating the amount of queued UL data belonging only to the highest-priority access category, and a second buffer state field indicating the amount of queued UL data aggregated across the remaining (or all) access categories. Accordingly, in some implementations, the AP may allocate uplink resources to a given STA based on the amount and priority level(s) of the queued UL data residing in each STA.

Particular implementations of the subject matter described in this disclosure can be implemented to realize one or more of the following potential advantages. The implementations may improve the performance of wireless communications based on a limited availability of resources (such as bandwidth). For example, an AP typically has only a limited number of RUs to distribute or allocate among each of its associated STAs. With knowledge of the amount and priority level(s) of buffered UL data in each of its associated STAs, an AP may allocate more (or larger) RUs to STAs with more or higher-priority UL data to transmit and may allocate less (or smaller) RUs to STAs with less or lower-priority UL data to transmit. The overhead associated with each BSR transmission may be reduced or minimized by scaling the information provided in the BSR based on a quantization value, and by aggregating information associated with multiple access categories. Accordingly, the implementations described herein may allow an AP to dynamically generate an RU allocation scheme (specifying the size and number of RUs to be allocated to each device in a wireless network) that optimizes the throughput and latency of communications among all devices in a wireless network, at any given time.

In the following description, numerous specific details are set forth such as examples of specific components, circuits, and processes to provide a thorough understanding of the present disclosure. The term "coupled" as used herein means connected directly to or connected through one or more intervening components or circuits. The term "associated STA" refers to a STA that is associated with a given AP, and the term "non-associated STA" refers to a STA that is not associated with the given AP. In addition, as used herein, the term "trigger frame" may refer to a frame that directs each of a number of identified STAs to transmit uplink (UL) multi-user (MU) data on a resource unit allocated to the STA. The term "medium access" as used herein may refer to gaining or controlling access to a shared communication medium. The term "transmit opportunity" (TXOP) as used herein may refer to a period of time during which a device (or a portion of the device) may transmit data via the shared communication medium. Although described herein in terms of exchanging data frames between wireless devices, the implementations may be applied to the exchange of any data unit, packet, and/or frame between wireless devices. Thus, the term "frame" may include any frame, packet, or data unit such as, for example, protocol data units (PDUs), MAC protocol data units (MPDUs), and physical layer convergence procedure protocol data units (PPDUs)

The term "HT" may refer to a high throughput frame format or protocol defined, for example, by the IEEE 802.11n standards; the term "VHT" may refer to a very high throughput frame format or protocol defined, for example, by the IEEE 802.11ac standards; the term "HE" may refer to a high efficiency frame format or protocol defined, for example, by the IEEE 802.11ax standards; and the term "non-HT" may refer to a legacy frame format or protocol defined, for example, by the IEEE 802.11a/g standards. Thus, the terms "legacy" and "non-HT" may be used interchangeably herein. The term "legacy device" as used herein may refer to a device that operates according to the IEEE 802.11a/g standards, and the term "HE device" as used herein may refer to a device that operates according to the IEEE 802.11ax standards. Similarly, the term "HE STA" as used herein may refer to a wireless station that operates according to the IEEE 802.11ax standards, and the term "HE AP" as used herein may refer to an access point that operates according to the IEEE 802.11ax standards.

In addition, the term "Traffic Identifier (TID)" refers to a traffic classification indicating the relative priority level of the traffic, and the term "access category" refers to data that may be queued together or aggregated according to priority level. Thus, as used herein, the terms "TID," "access category," and "priority level" may be used interchangeably. However, it is to be understood that, for at least some implementations, there may not be a one-to-one correspondence between TID values and access categories.

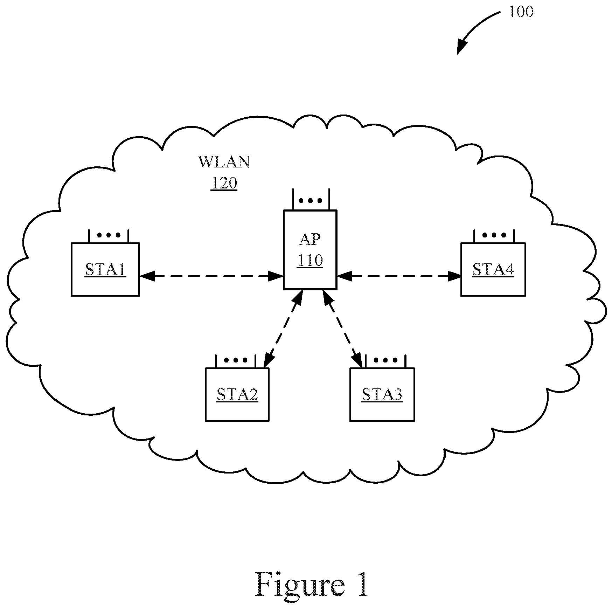

Figure 1 shows a block diagram of an example wireless system 100. The wireless system 100 is shown to include four wireless stations STA1-STA4, a wireless access point (AP) 110, and a wireless local area network (WLAN) 120. The WLAN 120 may be formed by a plurality of Wi-Fi access points (APs) that may operate according to the IEEE 802.11 family of standards (or according to other suitable wireless protocols). Thus, although only one AP 110 is shown in Figure 1 for simplicity, it is to be understood that WLAN 120 may be formed by any number of access points such as AP 110. The AP 110 is assigned a unique media access control (MAC) address that is programmed therein by, for example, the manufacturer of the access point. Similarly, each of the stations STA1-STA4 is also assigned a unique MAC address. In some aspects, the AP 110 may assign an association identification (AID) value to each of the stations STA1-STA4. Thereafter, the AP 110 may identify the stations STA1-STA4 using their assigned AID values.

In some implementations, the WLAN 120 may allow for multiple-input multiple-output (MIMO) communications between the AP 110 and the stations STA1-STA4. The MIMO communications may include single-user MIMO (SU-MIMO) or multi-user MIMO (MU-MIMO) communications. In addition, for at least some implementations, the WLAN 120 may utilize a multiple channel access mechanism such as, for example, OFDMA. Further, although the WLAN 120 is depicted in Figure 1 as an infrastructure basic service set (BSS), in some other implementations, WLAN 120 may be an IBSS, an ad-hoc network, or a peer-to-peer (P2P) network (operating according to the Wi-Fi Direct protocols).

Each of the stations STA1-STA4 may be any suitable Wi-Fi enabled wireless device including, for example, a cell phone, personal digital assistant (PDA), tablet device, laptop computer, or the like. Each STA also may be referred to as a user equipment (UE), a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In at least some implementations, each STA may include one or more transceivers, one or more processing resources (processors or ASICs), one or more memory resources, and a power source (such as a battery).

The AP 110 may be any suitable device that allows one or more wireless devices to connect to a network (such as a local area network (LAN), wide area network (WAN), metropolitan area network (MAN), or the Internet) via AP 110 using Wi-Fi, Bluetooth, or any other suitable wireless communication standards. In at least one implementation, AP 110 may include one or more transceivers, one or more processing resources (processors or ASICs), one or more memory resources, and a power source.

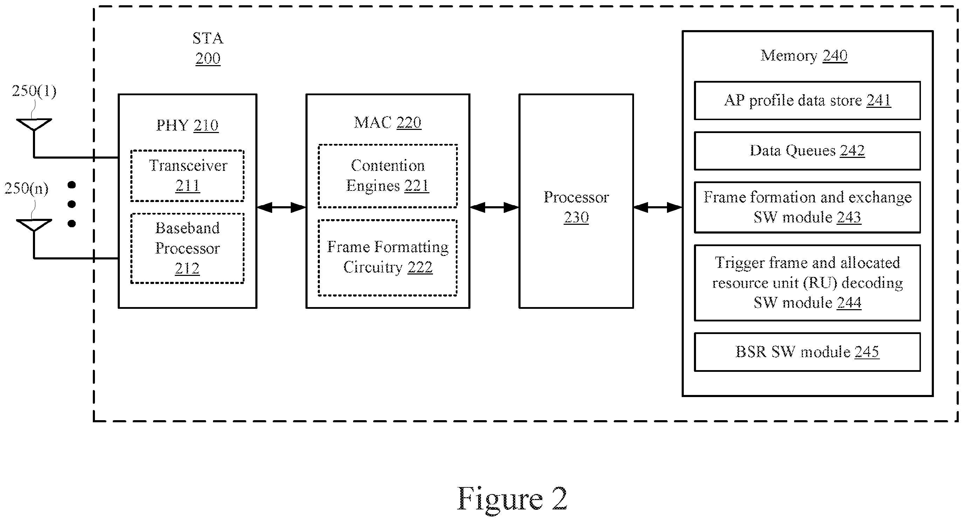

Figure 2 shows a block diagram of an example wireless station (STA) 200. The STA 200 may be an implementation of one or more of the stations STA1-STA4 of Figure 1. The STA 200 may include a physical layer device (PHY) 210, a media access control layer (MAC) 220, a processor 230, a memory 240, and a number of antennas 250(1)-250(n). The PHY 210 may include at least a number of transceivers 211 and a baseband processor 212. The transceivers 211 may be coupled to the antennas 250(1)-250(n), either directly or through an antenna selection circuit (not shown for simplicity). The transceivers 211 may be used to transmit signals to and receive signals from the AP 110 or other STAs (see also Figure 1), and may be used to scan the surrounding environment to detect and identify nearby access points or other STAs (within wireless range of the STA 200).

Although not shown in Figure 2 for simplicity, the transceivers 211 may include any number of transmit chains to process and transmit signals to other wireless devices via the antennas 250(1)-250(n), and may include any number of receive chains to process signals received from the antennas 250(1)-250(n). Thus, in some implementations, the STA 200 may be configured for MIMO operations. The MIMO operations may include SU-MIMO operations and MU-MIMO operations. In addition, the STA 200 may be configured for OFDMA communications or other suitable multiple access mechanisms, for example, as may be specified in the IEEE 802.11ax standards.

The baseband processor 212 may be used to process signals received from the processor 230 or the memory 240 and to forward the processed signals to the transceivers 211 for transmission via one or more of the antennas 250(1)-250(n), and may be used to process signals received from one or more of the antennas 250(1)-250(n) via the transceivers 211 and to forward the processed signals to the processor 230 or the memory 240.

The processor 230 may be any suitable one or more processors capable of executing scripts or instructions of one or more software programs stored in the STA 200 (such as within the memory 240). For purposes of discussion herein, the MAC 220 is shown in Figure 2 as being coupled between the PHY 210 and the processor 230. For actual implementations, the PHY 210, the MAC 220, the processor 230, or the memory 240 may be connected together using one or more buses (not shown for simplicity).

The MAC 220 may include at least a number of contention engines 221 and frame formatting circuitry 222. The contention engines 221 may contend for access to one more shared wireless mediums, and may store packets for transmission over the one more shared wireless mediums. The STA 200 may include one or more contention engines 221 for each of a plurality of different access categories. In some other implementations, the contention engines 221 may be separate from the MAC 220. Still further, in some implementations, the contention engines 221 may be implemented as one or more software modules (stored in memory 240 or stored in memory provided within the MAC 220).

The frame formatting circuitry 222 may be used to create or format frames received from the processor 230 or the memory 240 (such as by adding MAC headers to PDUs provided by the processor 230), and may be used to re-format frames received from the PHY 210 (such as by stripping MAC headers from frames received from the PHY 210).

The memory 240 may include an AP profile data store 241 that stores profile information for a plurality of APs. The profile information for a particular AP may include, for example, the AP's basic service set identification (BSSID), MAC address, channel information, received signal strength indicator (RSSI) values, goodput values, channel state information (CSI), supported data rates, connection history with the AP, a trustworthiness value of the AP (indicating a level of confidence about the AP's location, etc.), and any other suitable information pertaining to or describing the operation of the AP.

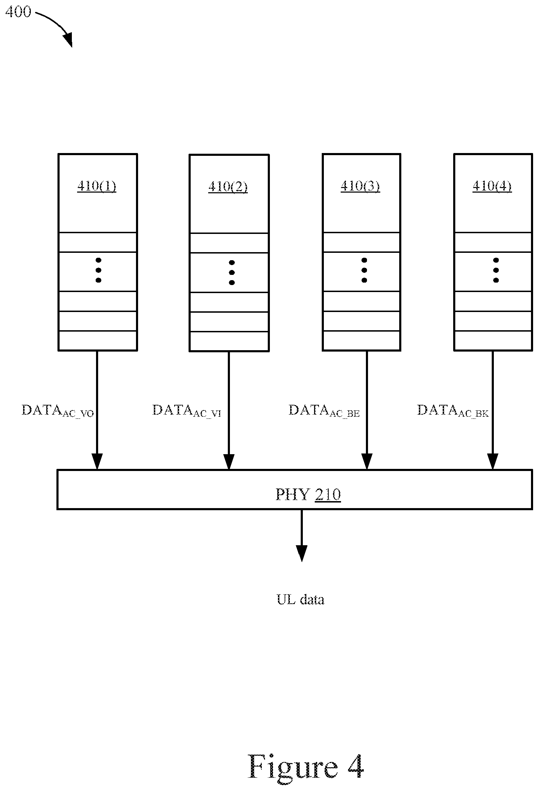

The memory 240 also may include a number of data queues 242. The data queues 242 may store uplink (UL) data to be transmitted from the STA 200 to one or more other wireless devices (such as an associated AP). In some aspects, the memory 240 may include one or more data queues 242 for each of a plurality of different priority levels or access categories, for example, as described in more detail with respect to Figure 4.

The memory 240 also may include a non-transitory computer-readable medium (one or more nonvolatile memory elements, such as EPROM, EEPROM, Flash memory, a hard drive, and so on) that may store at least the following software (SW) modules:
- a frame formation and exchange software module 243 to facilitate the creation and exchange of any suitable frames (such as data frames, action frames, control frames, and management frames) between the STA 200 and other wireless devices;
- a trigger frame and allocated resource unit (RU) decoding software module 244 to decode received trigger frames and to determine which RUs are allocated to the STA 200; and
- a buffer status report (BSR) software module 245 to generate a buffer status report for transmission to an AP, for example.
Each software module includes instructions that, when executed by the processor 230, cause the STA 200 to perform the corresponding functions.

For example, the processor 230 may execute the frame formation and exchange software module 243 to facilitate the creation and exchange of any suitable frames (such as data frames, action frames, control frames, and management frames) between the STA 200 and other wireless devices. The processor 230 may execute the trigger frame and allocated RU decoding software module 244 to decode received trigger frames and to determine which RUs are allocated to the STA 200. The processor 230 may execute the BSR software module 245 to generate a buffer status report for transmission to an AP.

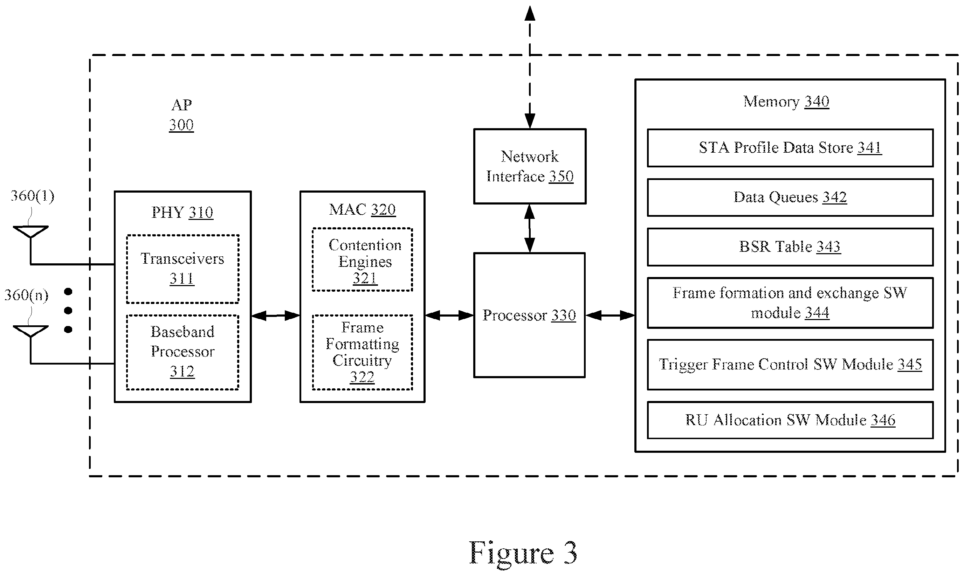

Figure 3 shows a block diagram of an example access point (AP) 300. The AP 300 may be an implementation of the AP 110 of Figure 1. The AP 300 may include a PHY 310, a MAC 320, a processor 330, a memory 340, a network interface 350, and a number of antennas 360(1)-360(n). The PHY 310 may include at least a number of transceivers 311 and a baseband processor 312. The transceivers 311 may be coupled to the antennas 360(1)-360(n), either directly or through an antenna selection circuit (not shown for simplicity). The transceivers 311 may be used to communicate wirelessly with one or more STAs, with one or more other APs, or with other suitable devices.

Although not shown in Figure 3 for simplicity, the transceivers 311 may include any number of transmit chains to process and transmit signals to other wireless devices via the antennas 360(1)-360(n), and may include any number of receive chains to process signals received from the antennas 360(1)-360(n). Thus, in some implementations, the AP 300 may be configured for MIMO operations including, for example, SU-MIMO operations and MU-MIMO operations. In addition, the AP 300 may be configured for OFDMA communications or other suitable multiple access mechanisms, for example, as may be specified by any of the IEEE 802.11 standards, such as 802.11ax.

The baseband processor 312 may be used to process signals received from the processor 330 or the memory 340 and to forward the processed signals to the transceivers 311 for transmission via one or more of the antennas 360(1)-360(n), and may be used to process signals received from one or more of the antennas 360(1)-360(n) via the transceivers 311 and to forward the processed signals to the processor 330 or the memory 340.

The network interface 350 may be used to communicate with a WLAN server (not shown for simplicity) either directly or via one or more intervening networks and to transmit signals.

The processor 330, which is coupled to the PHY 310, to the MAC 320, to the memory 340, and to the network interface 350, may be any suitable one or more processors capable of executing scripts or instructions of one or more software programs stored in the AP 300 (such as within the memory 340). For purposes of discussion herein, the MAC 320 is shown in Figure 3 as being coupled between the PHY 310 and the processor 330. In actual implementations, the PHY 310, the MAC 320, the processor 330, the memory 340, or the network interface 350 may be connected together using one or more buses (not shown for simplicity).

The MAC 320 may include at least a number of contention engines 321 and frame formatting circuitry 322. The contention engines 321 may contend for access to the shared wireless medium, and may store packets for transmission over the shared wireless medium. In some implementations, the AP 300 may include one or more contention engines 321 for each of a plurality of different access categories. In some other implementations, the contention engines 321 may be separate from the MAC 320. Still further, for some implementations, the contention engines 321 may be implemented as one or more software modules (stored in the memory 340 or in memory provided within the MAC 320).

The frame formatting circuitry 322 may be used to create or format frames received from the processor 330 or the memory 340 (such as by adding MAC headers to PDUs provided by the processor 330), and may be used to re-format frames received from the PHY 310 (such as by stripping MAC headers from frames received from the PHY 310).

The memory 340 may include a STA profile data store 341 that stores profile information for a plurality of STAs. The profile information for a particular STA may include, for example, its MAC address, supported data rates, connection history with the AP 300, one or more RUs allocated to the STA, and any other suitable information pertaining to or describing the operation of the STA.

The memory 340 may include a number of data queues 342. The data queues 342 may store packets to be transmitted from the AP 300 to one or more STAs. In some implementations, the memory 340 may include one or more data queues 342 for each of a plurality of different priority levels or access categories, for example, as described in more detail with respect to Figure 4. In at least some implementations, the memory 340 may include data queues for a plurality of different destinations (STAs).

The memory 340 may include a BSR table 343 that may store buffer status reports received from each of a plurality of STAs. In some aspects, the BSR table 343 may store, for each of a plurality of STAs, information indicating an amount of queued UL data and the priority level(s) of the queued UL data.

The memory 340 also may include a non-transitory computer-readable medium (one or more nonvolatile memory elements, such as EPROM, EEPROM, Flash memory, a hard drive, and so on) that may store at least the following software (SW) modules:
- a frame formation and exchange software module 344 to facilitate the creation and exchange of any suitable frames (such as data frames, action frames, control frames, and management frames) between the AP 300 and other wireless devices;
- a trigger frame control software module 345 to control the transmission of trigger frames to one or more STAs; and
- a resource unit (RU) allocation software module 346 to allocate a number of RUs to STAs based, at least in part, on buffer status reports received from the STAs (stored in the BSR table 343).
Each software module includes instructions that, when executed by the processor 330, cause the AP 300 to perform the corresponding functions.

For example, the processor 330 may execute the frame formation and exchange software module 344 to facilitate the creation and exchange of any suitable frames (such as data frames, action frames, control frames, and management frames) between the AP 300 and other wireless devices. The processor 330 may execute the trigger frame control software module 345 to control the transmission of trigger frames to one or more STAs. The processor 330 may execute the RU allocation software module 346 to allocate a number of RUs to STAs based, at least in part, on buffer status reports received from the STAs. The buffer status report received from each STA may indicate an amount of queued UL data in the STA and the priority level(s) of the queued UL data.

Figure 4 depicts an example data queuing system 400 that may be implemented within the STA shown in Figure 2. In some implementations, the data queuing system 400 may be implemented by or correspond to MAC 220, processor 230, or memory 240 of Figure 2. In some other implementations, the data queuing system 400 may be a separate device or chip coupled to PHY 210, MAC 220, processor 230, or memory 240 of Figure 2. The data queuing system 400 is shown to include four data queues 410(1)-410(4). Although only four data queues 410(1)-410(4) are shown in Figure 4 for simplicity, it is to be understood that the data queuing system 400 may include any suitable number of data queues.

The data queues 410(1)-410(4), which may be one implementation of the data queues 242 of Figure 2, may receive incoming data packets from an upper layer (not shown for simplicity) of the STA 200, for example, after packet classification operations may determine the priority level and the TID of UL data to be queued in the data queues 410(1)-410(4). More specifically, each of the data queues 410(1)-410(4) may store a set of queued UL data having a given priority level. For example, the first data queue 410(1) may store UL data associated with the AC_VO access category, the second data queue 410(2) may store UL data associated with the AC_VI access category, the third data queue 410(3) may store UL data associated with the AC_BE access category, and the fourth data queue 410(4) may store UL data associated with the AC_BK access category.

Referring also to Figure 2, the STA 200 may generate a buffer status report (BSR) at the granularity of the access category (AC). In accordance with some implementations, the state of a buffer for a given access category may be the aggregate of the number of bytes of queued UL data across all traffic flows that are mapped to the given access category. The aggregate of the number of bytes of the queued UL data may be quantized to a quantization value (QV), for example, to reduce the number of bits in the BSR needed to indicate the number of bits of the queued UL data. In some aspects, different quantization values may be assigned to different access categories. For example, the quantization value may be set to 8 bits for voice traffic (QV = 8 bits for AC_VO), while the quantization value may be set to 256 bits for best effort traffic (QV = 256 bits for AC_BE).

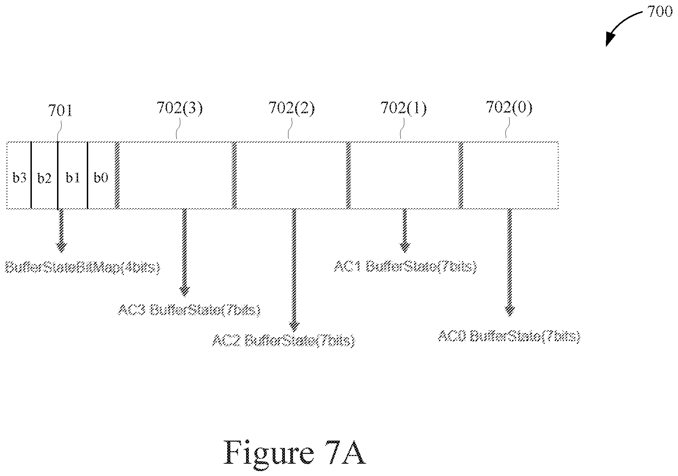

The STA 200 may transmit the BSR to the AP in any suitable manner. In some aspects, the BSR may be transmitted to the AP as part of a high-efficiency (HE) control frame, for example, as defined in the IEEE 802.11ax standards. Example BSR formats that may be used in accordance with some implementations are described in more detail with respect to Figures 7A-7D.

In a wireless network using OFDMA, the available frequency spectrum may be divided into a plurality of resource units (RUs) each including a number of different frequency subcarriers, and different RUs may be allocated or assigned to different wireless devices at a given point in time. In this manner, multiple wireless devices may concurrently transmit data on the wireless medium using their assigned RU or frequency subcarriers.

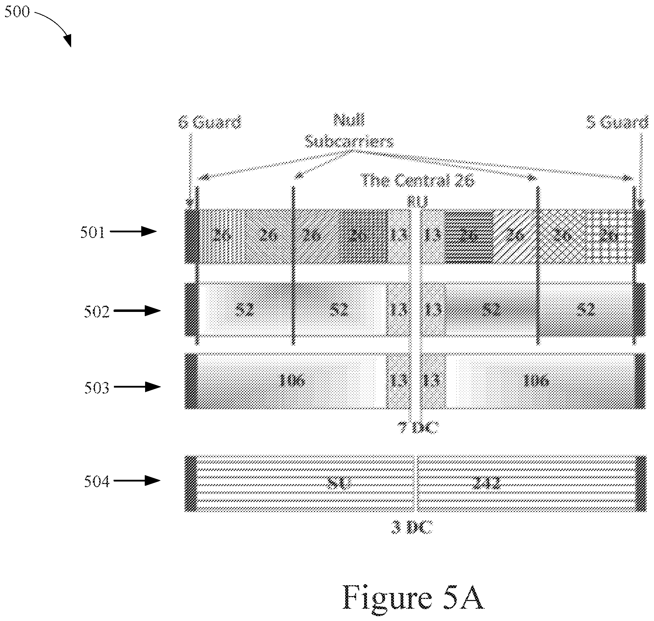

For example, Figure 5A shows an example subcarrier allocation diagram 500 for a 20 MHz bandwidth according to the IEEE 802.11ax standards. As shown in Figure 5A, a 20 MHz bandwidth may be divided into a number of resource units (RUs), and each RU may include a number of subcarriers. For example, a first subcarrier allocation 501 may include a number of RUs each including 26 subcarriers, a second subcarrier allocation 502 may include a number of RUs each including 52 subcarriers, a third subcarrier allocation 503 may include a number of RUs each including 106 subcarriers, and a fourth subcarrier allocation 504 may include one RU including 242 subcarriers (with half of the channel being reserved for single-user (SU) operations). For each of the example subcarrier allocations 501-504 depicted in Figure 5A, adjacent RUs may be separated by a null subcarrier (such as a DC subcarrier), for example, to reduce leakage between adjacent RUs. It is noted that the numbers 26, 52, 106, and 242 in the example subcarrier allocation diagram 500 represent the number of frequency subcarriers in each of the resource units for a corresponding subcarrier allocation.

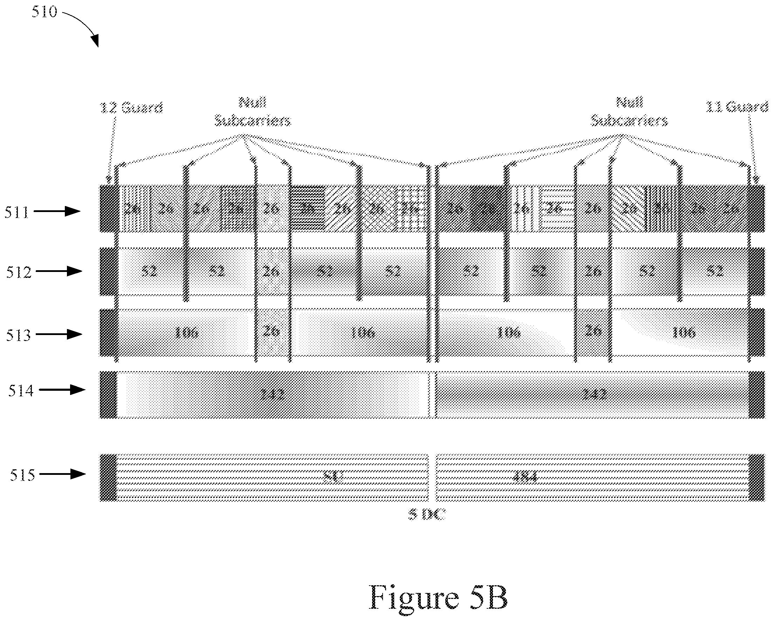

Figure 5B shows an example subcarrier allocation diagram 510 for a 40 MHz bandwidth according to the IEEE 802.11ax standards. As shown in Figure 5B, a 40 MHz bandwidth may be divided into a number of RUs, and each RU may include a number of subcarriers. For example, a first subcarrier allocation 511 may include a number of RUs each including 26 subcarriers, a second subcarrier allocation 512 may include a number of RUs each including 52 subcarriers, a third subcarrier allocation 513 may include a number of RUs each including 106 subcarriers, a fourth subcarrier allocation 514 may include a number of RUs each including 242 subcarriers, and a fifth subcarrier allocation 515 may include one RU including 484 subcarriers (with half of the channel being reserved for single-user (SU) operations). For each of the example subcarrier allocations 511-515 depicted in Figure 5B, adjacent RUs may be separated by a null subcarrier, for example, to reduce leakage between adjacent RUs. It is noted that the numbers 26, 52, 106, 242, and 484 in the example subcarrier allocation diagram 510 represent the number of frequency subcarriers in each of the resource units for a corresponding subcarrier allocation.

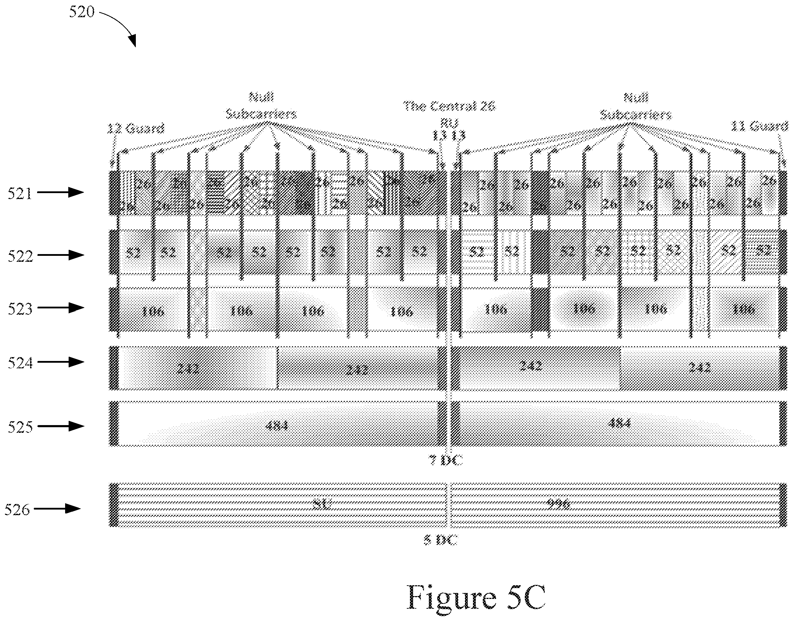

Figure 5C shows an example subcarrier allocation diagram 520 for an 80 MHz bandwidth according to the IEEE 802.11ax standards. As shown in Figure 5C, an 80 MHz bandwidth may be divided into a number of resource units (RUs), and each RU may include a number of subcarriers. For example, a first subcarrier allocation 521 may include a number of RUs each including 26 subcarriers, a second subcarrier allocation 522 may include a number of RUs each including 52 subcarriers, a third subcarrier allocation 523 may include a number of RUs each including 106 subcarriers, a fourth subcarrier allocation 524 may include a number of RUs each including 242 subcarriers, a fifth subcarrier allocation 525 may include a number of RUs each including 484 subcarriers, and a sixth subcarrier allocation 526 may include one RU including 996 subcarriers (with half of the channel being reserved for single-user (SU) operations). For each of the example subcarrier allocations 521-526 depicted in Figure 5C, adjacent RUs may be separated by a null subcarrier, for example, to reduce leakage between adjacent RUs. It is noted that the number 26, 52, 106, 242, 484, and 996 in the example subcarrier allocation diagram 520 represent the number of frequency subcarriers in each of the resource units for a corresponding subcarrier allocation.

In an OFDMA-based WLAN, the AP may select the size and location of one or more RUs upon which each of its associated STAs may transmit data, and may then direct each of a number of STAs to transmit its UL data on an allocated set of RUs using a trigger frame. More specifically, the trigger frame may include the RU size and location, the modulation and coding scheme (MCS), and the power level for UL transmissions to be used by each of the STAs identified in the trigger frame. In some implementations, the AP may select the size and location of one or more RUs to be allocated to a given STA based on a buffer status report received from the STA, for example, so that each allocated RU is of a size and location based, at least in part, on the amount of queued UL data in the STA and the priority level(s) of the queued UL data.

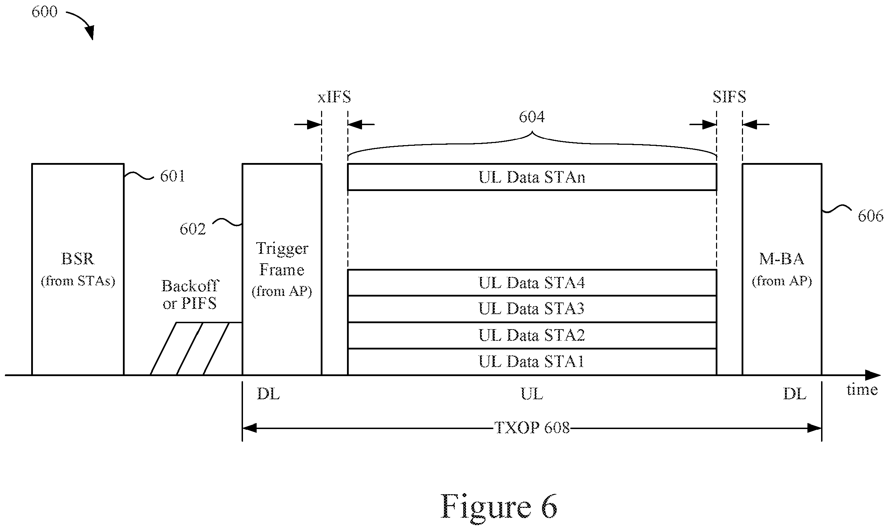

For example, Figure 6 shows a sequence diagram 600 depicting an example operation for selecting the size and location of resource units (RUs) to be allocated to a number of STAs based, at least in part, on buffer status reports (BSRs) received from the stations STA1-STAn. For the example of Figure 6, the AP may be any suitable AP including, for example, the AP 110 of Figure 1 or the AP 300 of Figure 3. Each of the stations STA1-STAn may be any suitable wireless station including, for example, the stations STA1-STA4 of Figure 1 or the STA 200 of Figure 2.

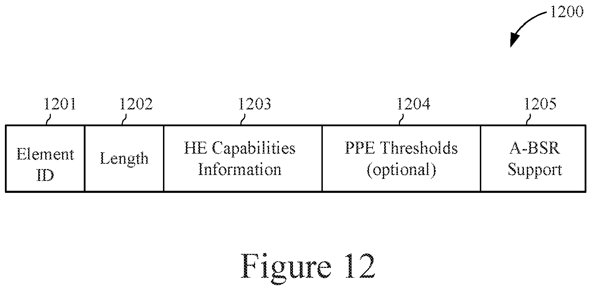

For purposes of discussion herein, the AP depicted in Figure 6 is an HE AP, and each of the stations STA1-STAn are HE STAs. In some implementations, each of the stations STA1-STAn may indicate that it is an HE STA by transmitting a HE Capabilities element to the AP. The HE Capabilities element may include a number of fields used to advertise the HE capabilities of a HE STA, for example, as described in more detail with respect to Figure 12.

As depicted in Figure 6, the stations STA1-STAn may each transmit a buffer status report (BSR) 601 to the AP. Each BSR 601 may indicate an amount and the priority level(s) of queued UL data in a corresponding one of the stations STA1-STAn. The AP may receive the BSRs 601 from the stations STA1-STAn, and then select the size and location of RUs to be allocated to the stations STA1-STAn based on the BSRs 601. In some aspects, the BSRs 601 may indicate the quality of service (QoS) parameters, delay requirements (such as relatively short delays for voice traffic and relatively long delays for background or best effort traffic) of the stations STA1-STAn, or any other suitable metric that may be used to select and prioritize the allocation of RUs to the stations STA1-STAn.

Then, for at least the example depicted in Figure 6, the AP may contend for medium access during a backoff period or a point coordination function (PCF) interframe space (PIFS) duration. After gaining access to the wireless medium, the AP obtains a TXOP 608, and may transmit a trigger frame 602 to the stations STA1-STAn on a downlink (DL) channel. The trigger frame 602 may be used to allocate RUs for UL data transmissions from the stations STA1-STAn or to solicit UL data transmissions 604 at an unspecified interframe spacing (xIFS) after reception of the trigger frame 602. As used herein, the RU size may indicate the bandwidth of the RU, and the RU location may indicate which frequency subcarriers are allocated to the RU.

Upon receiving the trigger frame 602, each of the stations STA1-STAn identified by the trigger frame 602 may begin transmitting UL data on its allocated RUs (on the frequency subcarriers allocated by the AP). In some aspects, each of the stations STA1-STAn may determine whether its allocated frequency band is idle (such as for a PIFS duration) prior to transmitting the UL data to the AP. The AP may acknowledge reception of the UL data from the stations STA1-STAn, for example, by transmitting a multi-station block acknowledgement (M-BA) frame 606 after a short interframe spacing (SIFS) duration.

Figure 7A shows an example buffer status report (BSR) 700. The BSR 700 is shown to include a buffer state bitmap 701, a buffer state field 702(3) for AC3 data, a buffer state field 702(2) for AC2 data, a buffer state field 702(1) for AC1 data, and a buffer state field 702(0) for AC0 data. The buffer state bitmap 701 may include four state bits b3-b0 to indicate whether the BSR 700 includes buffer state information for access categories AC3-AC0, respectively. In some aspects, an asserted (logic "1") state bit may indicate that the BSR 700 includes buffer state information for a corresponding access category, while a de-asserted (logic "0") state bit may indicate that the BSR 700 does not include buffer state information for the corresponding access category. For one example, if the queued UL data includes data belonging to access categories AC3, AC1, and AC0, then the buffer state bitmap 701 may store a value of "1011." For another example, if there is no queued UL data, then the buffer state bitmap 701 may store a value of "0000." In this case, the contents of all buffer state fields 702(3)-702(0) may be set to zero.

Each of the buffer state fields 702(3)-702(0) may include a quantized number that indicates the number of bits of queued UL data that belongs to the corresponding access category. In some aspects, the quantization value (QV) may be the same for all access categories represented in the BSR 700. For one example, if QV = 8 for all access categories, then a quantized number of 8 stored in buffer state field 702(3) may indicate that the STA has 8^{∗}8 = 64 bits of queued UL data that belongs to AC3 (background traffic). For another example, if QV = 8 for all access categories, then a quantized number of 20 stored in buffer state field 702(2) may indicate that the STA has 8^{∗}20 = 160 bits of queued UL data that belongs to AC2 (best effort traffic). For another example, if QV = 8 for all access categories, then a quantized number of 32 stored in buffer state field 702(1) may indicate that the STA has 8^{∗}32= 256 bits of queued UL data that belongs to AC1 (video traffic). For another example, if QV = 8 for all access categories, then a quantized number of 8 stored in buffer state field 702(0) may indicate that the STA has 8^{∗}8 = 64 bits of queued UL data that belongs to AC0 (voice traffic). In some implementations, the BSR 700 is 32 bits long (although in some other implementations, the BSR 700 may be of other suitable lengths).

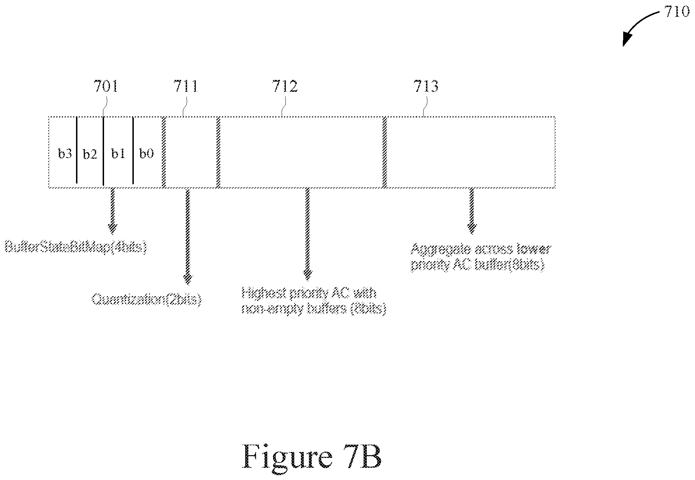

Figure 7B shows another example BSR 710. The BSR 710 is shown to include buffer state bitmap 701, a quantization field 711, a buffer state field 712 for the highest priority data that is queued for UL transmission in the STA, and an aggregated buffer state field 713. The buffer state bitmap 701 is similar to that described with respect to Figure 7A. The quantization field 711 may store a quantization value (QV) used in the buffer state fields 712-713.

The buffer state field 712 may store a quantized number indicating the number of bits of queued UL data that belongs to highest priority access category. For example, if the quantization field 711 stores a value of QV = 8, then a quantized number of 256 stored in buffer state field 712 may indicate that the STA has 8^{∗}256 = 2048 bits of queued UL data that belongs to AC0 (voice traffic). The aggregated buffer state field 713 may store a quantized number indicating the number of bits of queued UL data that belongs to all lower-priority access categories. For example, if the buffer state field 712 stores a quantized number indicating the number of bits of queued UL data that belongs to access category AC0, then the aggregated buffer state field 713 may store a quantized number indicating the number of bits of queued UL data that belongs to the lower-priority access categories AC1-AC3. In some implementations, the BSR 710 is 22 bits long (although in some other implementations, the BSR 710 may be of other suitable lengths).

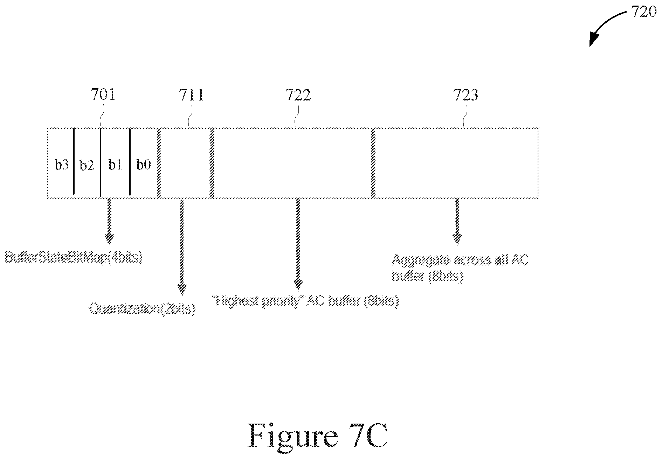

Figure 7C shows another example BSR 720. The BSR 720 is shown to include the buffer state bitmap 701, the quantization field 711, a buffer state field 722 for the highest priority access category, and an aggregated buffer state field 723. The buffer state bitmap 701 is similar to that described with respect to Figure 7A. The quantization field 711 may store a quantization value (QV) used in the buffer state fields 722-723.

The buffer state field 722 may store a quantized number indicating the number of bits of queued UL data that belongs to highest priority access category as selected by the STA. Thus, in contrast to the buffer state field 712 of Figure 7B, the buffer state field 722 of Figure 7C may store a quantized number indicating the number of bits of queued UL data that the STA selects to be transmitted first. The aggregated buffer state field 723 may store a quantized number indicating the number of bits of queued UL data that belongs to all access categories AC0-AC3. In some implementations, the BSR 720 is 22 bits long (although in some other implementations, the BSR 720 may be of other suitable lengths).

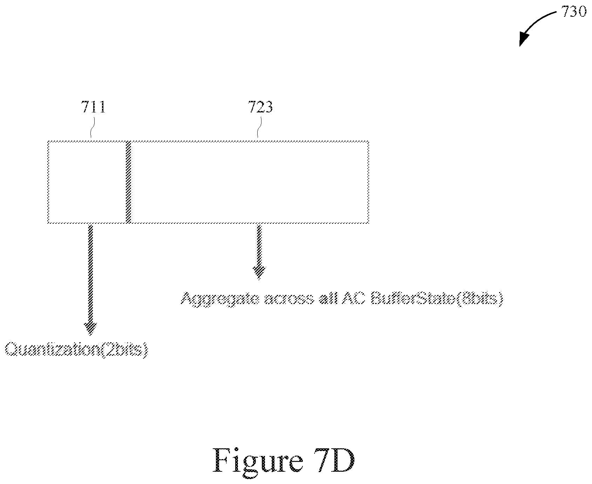

Figure 7D shows another example BSR 730. The BSR 730 is shown to include the quantization field 711 and the aggregated buffer state field 723. The aggregated buffer state field 723 may store a quantized number indicating the number of bits of queued UL data that belongs to all access categories AC0-AC3. Thus, in contrast to the BSRs 700, 710, and 720, the BSR 730 of Figure 7D may report the aggregated size of all queued UL data (regardless of access category). In some implementations, the BSR 730 is 10 bits long (although in some other implementations, the BSR 730 may be of other suitable lengths).

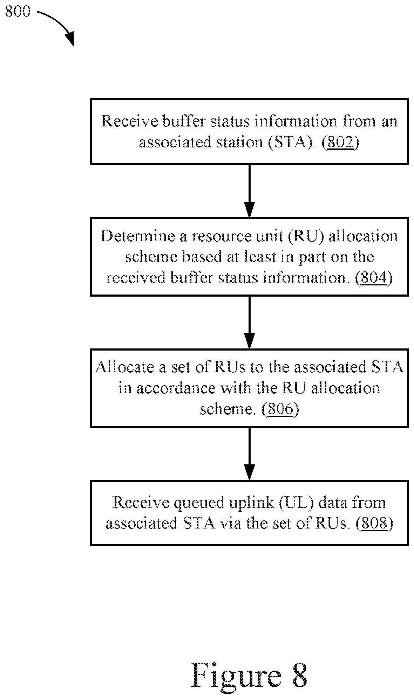

Figure 8 shows a flowchart 800 depicting an example operation for allocating RUs to a STA based, at least in part, on a buffer status report received from the STA. In some implementations, the AP may correspond to the AP 110 of Figure 1 or the AP 300 of Figure 3, and the STA may be one of the stations STA1-STA4 of Figure 1 or the STA 200 of Figure 2.

The AP may receive buffer status information from an associated STA (802). For example, the buffer status information may be sent via buffer status reports (BSRs) from one or more of the associated STAs (such as described with respect to Figures 7A-7D). The buffer status information may indicate an amount of queued UL data in the associated STA. In some implementations, the buffer status information may further indicate a priority level of the queued UL data. For example, the priority level may be based at least in part on QoS parameters, delay requirements, or access categories associated with the queued UL data.

The AP may determine an RU allocation scheme based at least in part on the received buffer status information (804). For example, the RU allocation scheme may indicate how bandwidth resources are to be distributed among the associated STAs (for UL transmissions). More specifically, the RU allocation scheme may specify the size and number of RUs to be allocated to each individual STA associated with the AP. In some implementations, the RU allocation scheme may be generated based on buffer status information received from multiple associated STAs. For example, the AP may compare the amount and priority of queued UL data in each of its associated STAs to determine an RU allocation scheme that optimizes communications across all associated STAs.

The AP may allocate a set of RUs to the associated STA in accordance with the RU allocation scheme (806). The RU allocation scheme may specify the size and number of RUs to be allocated to each individual STA associated with the AP based at least in part on the amount and priority of queued UL data in each of the STAs. For example, the size or number of RUs allocated to a first STA may be greater than the size or number of RUs allocated to a second STA if the first STA has more UL data to transmit than the second STA. Similarly, the size or number of RUs allocated to the first STA may be greater than the size or number of RUs allocated to the second STA if the first STA has higher-priority UL data to transmit than the second STA. In some implementations, the AP may allocate the set of RUs to a particular STA via a trigger frame sent to that STA.

The AP may receive queued UL data from the associated STA via the set of RUs (808). In some implementations, the operation of Figure 8 may be repeated periodically or in response to changes in the amount or priority of queued UL data in each of the associated stations STA1-STAn. For example, the AP may reduce the size or number of RUs allocated to a first STA when the amount of queued UL data in the first STA drops (or when the amount of queued UL data in a second STA increases beyond that of the first STA). Similarly, the AP may reduce the size or number of RUs allocated to the first STA when the priority of queued UL data in the first STA drops (or when the priority of queued UL data in the second STA increases beyond that of the first STA). In this manner, the AP may dynamically adjust the RU allocation scheme based on the needs of its associated STAs (or characteristics of the wireless network) at any given time.

As described with respect to Figure 6, the stations STA1-STAn associated with an AP may each transmit a BSR 601 indicating an amount and the priority level(s) of queued UL data. In response, the AP may select the size and location of RUs to be allocated to the stations STA1-STAn based on the received BSRs 601. For the example of Figure 6, the stations STA1-STAn may transmit the BSRs 601 to the AP in the absence of a request from the AP.

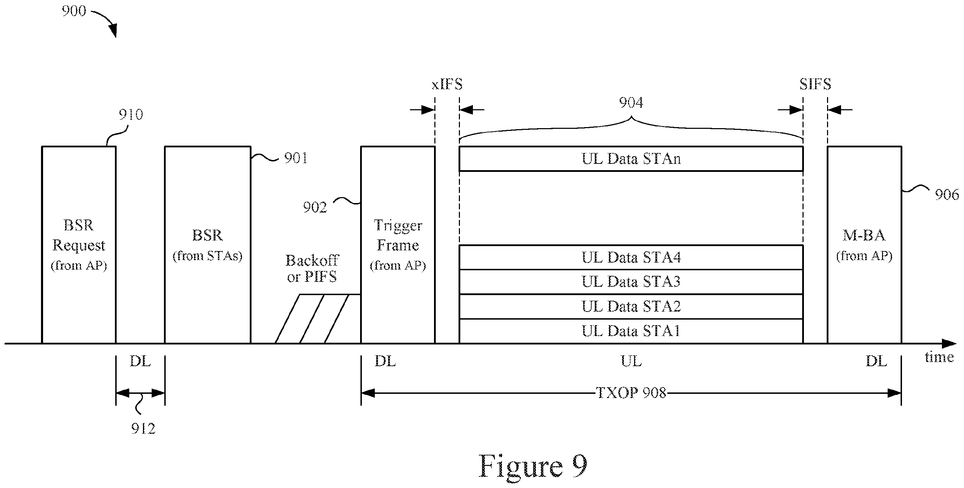

In some other implementations, it may be desirable for the AP to request one or more of its associated STAs to transmit a BSR to the AP, for example, to ensure that the AP is aware of the amount of UL data queued in each of its associated STAs. For example, Figure 9 shows a sequence diagram 900 depicting an example operation for requesting buffer status reports from a number of STAs. For the example of Figure 9, the AP may be any suitable AP including, for example, the AP of Figure 6. Each of the stations STA1-STAn of Figure 9 may be an implementation of a respective one of stations STA1-STAn of Figure 6.

As depicted in Figure 9, the AP may transmit a BSR request 910 to one or more of the stations STA1-STAn. The BSR request 910 may request, trigger, solicit, instruct, or otherwise cause the stations STA1-STAn to transmit buffer status information to the AP. In addition to requesting buffer status information, the BSR request 910 also may indicate the granularity (based on the quantization value (QV)) of the amount of queued UL data to be reported by the stations STA1-STAn. In some aspects, the BSR request 910 may be a broadcast frame that requests all associated stations STA1-STAn to transmit buffer status information to the AP. In some other aspects, the BSR request 910 may be one or more unicast frames each requesting a corresponding one of the stations STA1-STAn to transmit buffer status information to the AP.

BSR request 910 may be any suitable frame (or may be included within any suitable frame) transmitted from the AP to the stations STA1-STAn. In some implementations, the BSR request 910 may be included within or otherwise associated with a broadcast trigger frame, a unicast trigger frame, or a trigger frame for random channel access. In some other implementations, the BSR request 910 may be included within or otherwise associated with a data frame containing trigger information. In some aspects, the BSR request 910 may be included within a high efficiency aggregate control (HE A-Control) field of the data frame.

In some implementations, after transmitting the BSR request 910 to the stations STA1-STAn, the AP may transmit DL data to one or more of the stations STA1-STAn during time period 912. In some aspects, the AP may concurrently transmit DL data to one or more of the stations STA1-STAn during time period 912 using OFDMA signaling techniques. In some other aspects, the AP may transmit DL data to one or more of the stations STA1-STAn during time period 912 using MU-MIMO communications.

In response to receiving the BSR request 910, the stations STA1-STAn may each transmit a buffer status report (BSR) 901 to the AP. Each BSR 901 may indicate an amount and the priority level(s) of queued UL data in a corresponding one of the stations STA1-STAn. Referring also to Figures 7A-7D, the aggregate number of bytes of queued UL data in a given STA, which may be referred to herein as the "Queue Size," may be quantized to a quantization value (QV) to reduce the size of the BSR 901. Different quantization values may be assigned to different access categories. For example, the quantization value may be set to 8 bits for voice traffic (QV = 8 bits for AC_VO), while the quantization value may be set to 256 bits for best effort traffic (QV = 256 bits for AC_BE).

In some aspects, each BSR 901 may include the Queue Size subfield in a QoS Control field or a HE A-Control field of a BSR transmitted to the AP. More specifically, to report its buffer status for a given TID, each of the stations STA1-STAn may store a value in the Queue Size subfield of a QoS Data frame or in the Queue Size subfield of a QoS Null frame to indicate the amount of UL data stored in the output queue associated with the given TID.

The AP may receive the BSRs 901 from the stations STA1-STAn, and then select the size and location of RUs to be allocated to the stations STA1-STAn based on the BSRs 901. The BSRs 901 may indicate the QoS parameters, delay requirements (such as relatively short delays for voice traffic and relatively long delays for background or best effort traffic) of the stations STA1-STAn, or any other suitable metric that may be used to select and prioritize the allocation of RUs to the stations STA1-STAn. In some implementations, each of the BSRs 901 also may indicate access category information and TID information of UL data queued in a corresponding one of the stations STA1-STAn.

In some implementations, each BSR 901 may be included or embedded within the control information of a frame transmitted to the AP. More specifically, in some aspects, the BSR 901 may be included within an aggregate control (A-Control) field of the frame transmitted to the AP. In some other aspects, the BSR 901 may be one or more unicast frames each requesting a corresponding one of the associated stations STA1-STAn to transmit buffer status information to the AP.

Then, the AP may contend for medium access during a backoff period or a PIFS duration (such as described with respect to Figure 6). After gaining access to the wireless medium, the AP obtains TXOP 908, and may transmit trigger frame 902 to the stations STA1-STAn on the DL channel. The trigger frame 902 may be used to allocate RUs for UL MU data transmissions from the stations STA1-STAn or to solicit UL MU data transmissions 904 at xIFS duration after reception of the trigger frame 902.

Upon receiving the trigger frame 902, each of the stations STA1-STAn identified by the trigger frame 902 may begin transmitting UL MU data on its allocated RUs (on the frequency subcarriers allocated by the AP). In some aspects, each of the stations STA1-STAn may determine whether its allocated frequency band is idle (such as for a PIFS duration) prior to transmitting the UL data to the AP. The AP may acknowledge reception of the UL MU data from the stations STA1-STAn, for example, by transmitting an M-BA frame 906 after a SIFS duration.

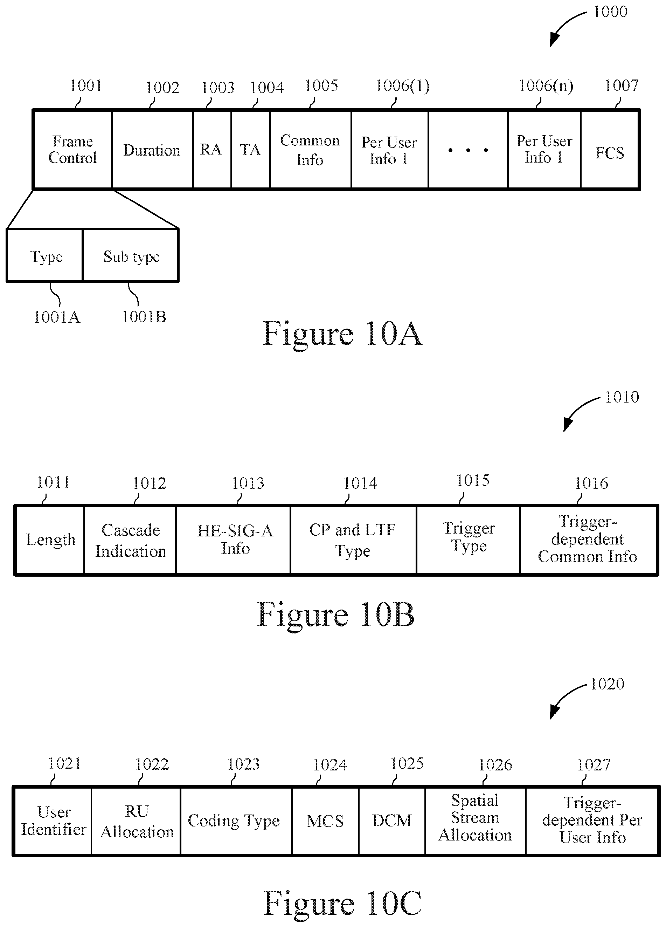

Figure 10A shows an example trigger frame 1000 that may be used for requesting buffer status reports from a STA. Trigger frame 1000, which may be used as the trigger frame 602 of Figure 6 or as the trigger frame 902 of Figure 9, is shown to include a frame control field 1001, a duration field 1002, a receiver address (RA) field 1003, a transmitter address (TA) field 1004, a Common Info field 1005, a number of Per User Info fields 1006(1)-1006(n), and a frame check sequence (FCS) field 1007.

The frame control field 1001 includes a Type field 1001A and a Sub-type field 1001B. The Type field 1001A may store a value to indicate that frame 1000 is a control frame, and the Sub-type field 1001B may store a value indicating a trigger frame. For at least some implementations, a value of "0" stored in the Sub-type field 1001B may indicate that trigger frame 902 is a basic trigger frame; a value of "1" stored in the Sub-type field 1001B may indicate that trigger frame 902 is a beamforming report poll trigger frame; a value of "2" stored in the Sub-type field 1001B may indicate that trigger frame 902 is a multi-user block acknowledgement request (MU-BAR) frame; a value of "3" stored in the Sub-type field 1001B may indicate that trigger frame 902 is a multi-user ready-to-send (MU-RTS) frame; and a value of "4" stored in the Sub-type field 1001B may indicate that trigger frame 902 is a Buffer Status Report Poll (BSRP) variant trigger frame. These example trigger type values and trigger type descriptions are summarized in Table 1.

**Table 1**

| **Trigger Type value** | **Trigger Type description** |
|---|---|
| 0 | Basic Trigger |
| 1 | Beamforming Report Poll Trigger |
| 2 | MU-BAR |
| 3 | MU-RTS |
| 4 | Buffer Status Report Poll (BSRP) variant Trigger |
| 5-15 | Reserved |

The RA field 1003 may store the address of a receiving device (such as one of the stations STA1-STAn of Figure 9). The TA field 1004 may store the address of a transmitting device (such as the AP of Figure 9). The Common Info field 1005 may store information common to one or more receiving devices. Each of the Per User Info fields 1006(1)-1006(n) may store information for a particular receiving device. The FCS field 1007 may store a frame check sequence (for error detection).

Figure 10B shows a more detailed example of the Common Info field 1005 shown in Figure 10A. The Common Info 1010 is shown to include a length subfield 1011, a cascade indication subfield 1012, a high-efficiency signaling A (HE-SIG-A) info subfield 1013, a cyclic prefix (CP) and legacy training field (LTF) type subfield 1014, a trigger type subfield 1015, and a trigger-dependent common info subfield 1016. The length subfield 1011 indicates the value of the L-SIG Length field of the PPDU that is to be transmitted in response to the Trigger frame. The cascade indication subfield 1012 indicates whether a subsequent trigger frame follows the current trigger frame. The HE-SIG-A Info subfield 1013 indicates the contents of the HE-SIG-A field of the PPDU that is to be transmitted in response to the Trigger frame. The CP and LTF type subfield 1014 indicates the cyclic prefix and HE-LTF type of the PPDU that is to be transmitted in response to the trigger frame. The trigger type subfield 1015 indicates the type of trigger frame (such as a basic trigger frame or a beamforming report poll trigger frame). The trigger-dependent common info subfield 1016 may indicate trigger-dependent information.

Figure 10C shows a more detailed example of the Per User Info field 1006 shown in Figure 10A. The Per User Info field 1020 is shown to include a User Identifier subfield 1021, an RU Allocation subfield 1022, a Coding Type subfield 1023, an MCS subfield 1024, a dual-carrier modulation (DCM) subfield 1025, a spatial stream (SS) Allocation subfield 1026, and a trigger-dependent Per User info subfield 1027. The User Identifier subfield 1021 indicates the association identification (AID) of the STA that is allocated the RU for transmitting UL MU data. The RU Allocation subfield 1022 indicates the RU to be used by the STA identified by User Identifier subfield 1021. The Coding Type subfield 1023 indicates the code type of the response to be transmitted by the STA identified by User Identifier subfield 1021. The MCS subfield 1024 indicates the MCS of the response to be transmitted by the STA identified by User Identifier subfield 1021. The DCM subfield 1025 indicates dual carrier modulation of the response to be transmitted by the STA identified by User Identifier subfield 1021. The SS Allocation subfield 1026 indicates the spatial streams of the response to be transmitted by the STA identified by User Identifier field 1021.

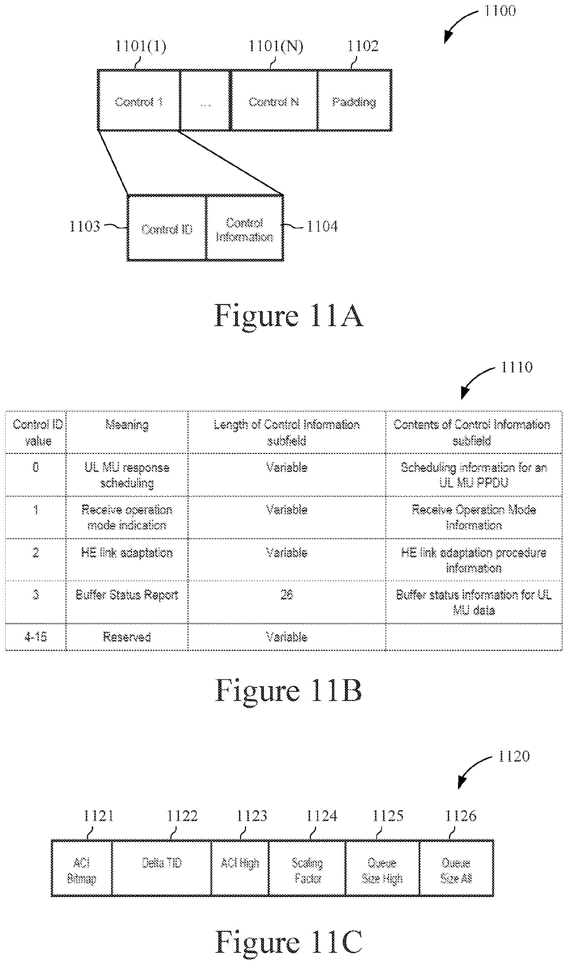

Figure 11A shows an example Aggregated Control (A-Control) subfield 1100 of a high-efficiency HE variant high-throughput (HT) control frame. The A-Control subfield 1100 may include a number (N) of Control subfields 1101(1)-1101(N) and a padding field 1102. Each of the Control subfields 1101(1)-1101(N) may include a Control ID subfield 1103 and a Control Information subfield 1104. Each of the Control subfields 1101(1)-1101(N) may include a variable number of bits. In some aspects, the Control ID subfield 1103 may include 4 bits, and the Control Information subfield 1104 may be of a variable length.

The Control ID subfield 1103 may store a Control ID value indicating the type of information contained in the Control Information subfield 1104 and the length of the Control Information subfield 1104. For example, a Control ID value of "0" may be stored in the Control ID subfield 1103 when the transmitting device expects an UL MU PPDU that carries an immediate acknowledgement. For another example, a Control ID value of "1" may be stored in the Control ID subfield 1103 when the transmitting device changes its receive operation mode. For another example, a Control ID value of "2" may be stored in the Control ID subfield 1103 when the transmitting device follows the HE link adaption procedure. For another example, a Control ID value of "3" may be stored in the Control ID subfield 1103 when the transmitting device follows a corresponding buffer status report procedure. A summary of example Control ID values and their corresponding meanings is depicted in the example table 1110 shown in Figure 11B.

Figure 11C shows an example buffer status report 1120 that may be provided within a Control ID subfield. The buffer status report 1120 is shown to include an access category indicator (ACI) bitmap subfield 1121, a Delta TID subfield 1122, an ACI High subfield 1123, a Scaling Factor subfield 1124, a Queue Size High subfield 1125, and a Queue Size High subfield 1126. In some aspects, the ACI bitmap subfield 1121 may include 4 bits, the Delta TID subfield 1122 may include 2 bits, the ACI High subfield 1123 may include 2 bits, the Scaling Factor subfield 1124 may include 2 bits, the Queue Size High subfield 1125 may include 8 bits, and the Queue Size High subfield 1126 may include 8 bits. It is noted that these example subfield lengths are for illustrative purposes only. In actual implementations, each of the subfields 1121-1126 may be of any suitable length.

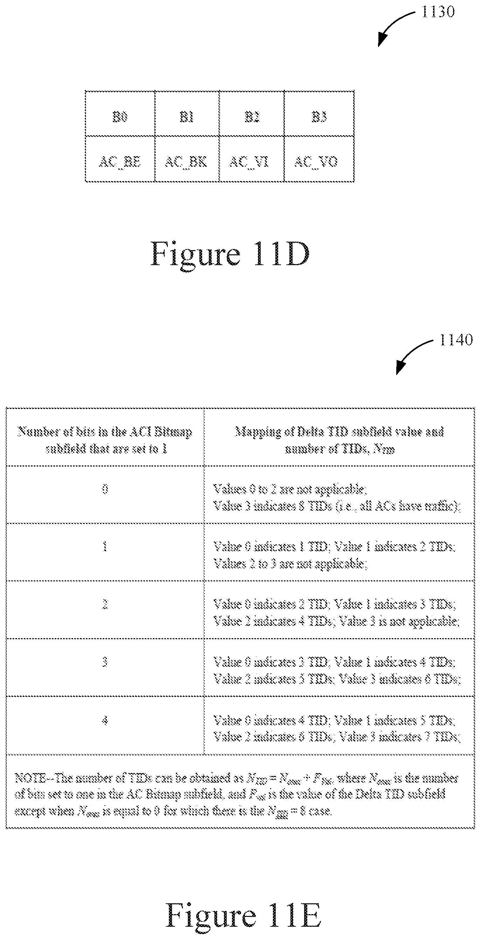

The ACI bitmap subfield 1121 may store an ACI bitmap indicating the access categories for which the buffer status is reported and its encoding. In some aspects, each bit of the ACI bitmap may be set to "1" to indicate a presence of buffer status information for a corresponding AC, and may be set to "0" to indicate an absence of buffer status information for the corresponding AC. An example mapping between the bits of the ACI bitmap and the access categories AC_BE, AC_BK, AC_VI, and AC_VO is depicted in the table 1130 of Figure 11D.

The Delta TID subfield 1122 may store a value indicating the number of TIDs for which the STA is reporting buffer status information. An example encoding of the Delta TID subfield 1122 is depicted in the table 1140 of Figure 11E.

The ACI High subfield 1123 may store a value indicating the ACI of the access category for which the buffer status information is indicated in the Queue Size High subfield 1125. The Scaling Factor subfield 1124 may store a value indicating the unit size, denoted herein as "SF," of the Queue Size subfields 1125 and 1126. For example, in some aspects, a value of "0" stored in the Scaling Factor subfield 1124 may indicate that SF = 64 bytes, a value of "1" stored in the Scaling Factor subfield 1124 may indicate that SF = 256 bytes, a value of "2" stored in the Scaling Factor subfield 1124 may indicate that SF = 4096 bytes, and a value of "3" stored in the Scaling Factor subfield 1124 may indicate that SF = 16,834 bytes. For at least some implementations, the Scaling Factor may correspond to the quantization value (QV) described with respect to Figures 7B-7D.

The Queue Size High subfield 1125 may store a value indicating the amount of buffered traffic, in units of the scaling factor (SF), for the access category identified by the ACI High subfield 1123. The Queue Size High subfield 1126 may store a value indicating the amount of buffered traffic, in units of the scaling factor (SF), for all access categories identified by the ACI Bitmap subfield 1121. More specifically, the queue size value may be the total size, rounded up to the nearest multiple of SF bytes, of all MSDUs and A-MSDUs buffered at the STA in the delivery queues for access categories specified in the ACI Bitmap 1121 or in the ACI High subfield 1123. In some aspects, a queue size value of 254 may be used for all queue sizes greater than 254*SF bytes, and a queue size value of 255 may be used to indicate an unspecified or unknown queue size. In addition, for at least some implementations, if a QoS data frame is fragmented, then the queue size value may remain constant in all fragments (even if the amount of queued UL data changes as successive fragments are transmitted).

A station may indicate that it is a HE STA by transmitting a HE Capabilities element to one or more other devices. For example, Figure 12 shows an example high-efficiency (HE) Capabilities element 1200. The HE Capabilities element 1200 is shown to include an Element ID field 1201, a Length field 1202, a HE Capabilities Information field 1203, an optional PPE Thresholds field 1204, and an Aggregate Buffer Status Report (A-BSR) Support field 1205. In some aspects, the Element ID field 1201 may include 1 byte, the Length field 1202 may include 1 byte, the HE Capabilities Information field 1203 may include 2 bytes, the optional PPE Thresholds field 1204 may include a variable number of bytes, and the A-BSR Support field 1205 may include 1 bit. In some other aspects, the fields 1201-1205 of the HE Capabilities element 1200 may be of other suitable lengths.

The Element ID field 1201 may store a value indicating that the element 1200 is a HE Capabilities element. The Length field 1202 may store a value indicating the length of the HE Capabilities element 1200. The HE Capabilities Information field 1203 may store information indicating the HE capabilities of a corresponding HE device. In some aspects, the HE capabilities information may indicate whether PPE thresholds are present, may indicate target wake time (TWT) requester support, may indicate TWT responder support, or may indicate fragmentation support. The optional PPE Thresholds field 1204 may indicate additional information regarding PPE thresholds.

The A-BSR Support field 1205 may store information indicating whether a device (such as an AP) supports buffer status reports (BSRs) included within the HE variant HT control of a frame. More specifically, for an AP, the A-BSR Support field 1205 may indicate whether the AP is capable of receiving an A-MPDU that includes a BSR in the A-Control subfield of the HE variant HT control; for a STA, the A-BSR Support field 1205 may indicate whether the STA is capable of generating an A-MPDU that includes a BSR in the A-Control subfield of the HE variant HT control. In some aspects, the A-BSR Support field 1205 may be set to "1" when the STA supports BSR A-Control field functionality, and may be set to "0" when the STA does not support BSR A-Control field functionality.

In some implementations, a HE STA may deliver buffer status reports (BSRs) to assist an associated AP in allocating UL MU resources efficiently. In some aspects, the HE STA may implicitly deliver BSRs in the QoS Control field or in the BSR A-Control field of any frame transmitted to the AP, for example, as an unsolicited BSR. In some other aspects, the HE STA may explicitly deliver BSRs in any frame sent to the AP in response to a BSRP variant Trigger frame, for example, as a solicited BSR. The HE STA may report its buffer status to the associated AP using either the QoS Control field or the BSR A-Control field.

The HE STA may report buffer status information for a given TID in the Queue Size subfield of the QoS Control field in QoS Data frames or in QoS Null frames. The HE STA may set the Queue Size High subfield to 255 to indicate an unknown/unspecified BSR for that TID. The HE STA may aggregate multiple QoS Data frames or QoS Null frames in an A-MPDU to report buffer status information for different TIDs. The HE STA may report buffer status information in the BSR A-Control subfield of frames it transmits if the associated AP has indicated support for HE capabilities support (such as in the A-BSR Support subfield of an HE Capabilities element); otherwise, the HE STA may not report buffer status information in the BSR A-Control subfield.

In some implementations, the HE STA may report buffer status information for the highest priority AC (such as indicated by the ACI High subfield 1123 of Figure 11C) in the Queue Size High subfield 1125 of the BSR A-Control field. The HE STA may set the Queue Size High subfield value to 255 to indicate an unknown/unspecified BSR for a corresponding AC. In some other implementations, the HE STA may report buffer status information for all ACs (such as indicated by the ACI Bitmap subfield 1121 of Figure 11C) in the Queue Size All subfield 1126 of the BSR A-Control field. The HE STA may set the Queue Size All subfield value to 255 to indicate an unknown/unspecified BSR for the corresponding ACs. The HE STA may set the Delta TID subfield according to the table depicted in Figure 11E.

An AP may solicit one or more HE STAs for their BSR(s) by sending a BSRP variant Trigger frame. A STA that receives a BSRP variant Trigger frame may generate the trigger-based PPDU when the Trigger frame contains the STA's AID in any of the Per User Info fields 1006 of Figure 10A; otherwise, the STA may use a random channel access mechanism (such as a UL OFDMA-based random channel access technique) to gain access to a random RU, and thereafter generate the Trigger-based PPDU when the Trigger frame contains one or more random RU(s).

The STA may include, in the trigger-based PPDU, one or more QoS Data frames or one or more QoS Null frames that include either (1) at least one Queue Size subfield in the QoS Control field for each of the TIDs for which the STA has buffer status information to report to the AP or (2) at least one Queue Size All subfield of the BSR A-Control field for all the ACs, indicated by the ACI Bitmap subfield, for which the STA has buffer status information to report to the AP (but not both).

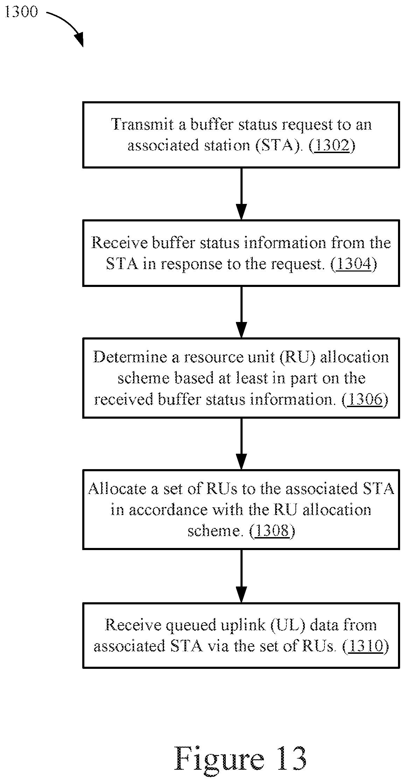

Figure 13 shows a flowchart 1300 depicting an example operation for requesting buffer status information from a STA. In some implementations, the AP may correspond to the AP 110 of Figure 1 or the AP 300 of Figure 3, and the STA may be one of the stations STA1-STA4 of Figure 1 or the STA 200 of Figure 2.

The AP may transmit a buffer status request to an associated STA (1302). In some implementations, the request may be a trigger frame. More specifically, the trigger frame may be a broadcast trigger frame, a unicast trigger frame, or a buffer status report poll (BSRP) variant trigger frame. In some other implementations, the request may be a data frame. For example, the request may be included within a high-efficiency aggregate control (HE A-Control) field of a data frame transmitted by the AP to the associated STA. In some aspects, the AP may transmit a respective buffer status request to each of a plurality of STAs associated with the AP.

The AP may receive buffer status information from the associated STA in response to the request (1304). For example, the buffer status information may be sent via buffer status reports (BSRs) from one or more of the associated STAs (such as described with respect to Figures 7A-7D). The buffer status information may indicate an amount of queued UL data in the associated STA. In some implementations, the buffer status information may further indicate a priority level of the queued UL data. For example, the priority level may be based at least in part on QoS parameters, delay requirements, or access categories associated with the queued UL data.

The AP may determine an RU allocation scheme based at least in part on the received buffer status information (1306). For example, the RU allocation scheme may indicate how bandwidth resources are to be distributed among the associated STAs (for UL transmissions). More specifically, the RU allocation scheme may specify the size and number of RUs to be allocated to each individual STA associated with the AP. In some implementations, the RU allocation scheme may be generated based on buffer status information received from multiple associated STAs. For example, the AP may compare the amount and priority of queued UL data in each of its associated STAs to determine an RU allocation scheme that optimizes communications across all associated STAs.

The AP may allocate a set of RUs to the associated STA in accordance with the RU allocation scheme (1308). The RU allocation scheme may specify the size and number of RUs to be allocated to each individual STA associated with the AP based at least in part on the amount and priority of queued UL data in each of the STAs. For example, the size or number of RUs allocated to a first STA may be greater than the size or number of RUs allocated to a second STA if the first STA has more UL data to transmit than the second STA. Similarly, the size or number of RUs allocated to the first STA may be greater than the size or number of RUs allocated to the second STA if the first STA has higher-priority UL data to transmit than the second STA. In some implementations, the AP may allocate the set of RUs to a particular STA via a trigger frame sent to that STA

The AP may receive queued UL data from the associated STA via the set of RUs (1310). In some implementations, the operation of Figure 13 may be repeated periodically. For example, the AP periodically transmit buffer status requests to one or more of its associated stations STA1-STAn to detect changes in the amount or priority of queued UL data in the corresponding STAs. In some aspects, the AP may reduce the size or number of RUs allocated to a first STA when the amount of queued UL data in the first STA drops (or when the amount of queued UL data in a second STA increases beyond that of the first STA). In some other aspects, the AP may reduce the size or number of RUs allocated to the first STA when the priority of queued UL data in the first STA drops (or when the priority of queued UL data in the second STA increases beyond that of the first STA). In this manner, the AP may dynamically adjust the RU allocation scheme based on the needs of its associated STAs (or characteristics of the wireless network) at any given time.

As used herein, a phrase referring to "at least one of' a list of items refers to any combination of those items, including single members. As an example, "at least one of: a, b, or c" is intended to cover: a, b, c, a-b, a-c, b-c, and a-b-c.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described throughout. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, or, any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include Flash memory, RAM, ROM, EPROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Bluray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to other implementations without departing from the scope of this disclosure. Thus, the claims are not intended to be limited to the implementations shown herein, but are to be accorded the widest scope consistent with this disclosure, the principles and the novel features disclosed herein.

Certain features that are described in this specification in the context of separate implementations also can be implemented in combination in a single implementation. Conversely, various features that are described in the context of a single implementation also can be implemented in multiple implementations separately or in any suitable subcombination. Moreover, although features may be described as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing may be advantageous. Moreover, the separation of various system components in the implementations described should not be understood as requiring such separation in all implementations, and it should be understood that the described program components and systems can generally be integrated together in a single software product or packaged into multiple software products. Additionally, other implementations are within the scope of the following claims. In some cases, the actions recited in the claims can be performed in a different order and still achieve desirable results.

## Claims

1. A method (800) of allocating resources to a first wireless station, STA, (200) for uplink, UL, transmissions, comprising:
receiving (802), from the first STA (200), buffer status information indicating one or more access categories or traffic identifiers, TIDs, for which the first STA has queued uplink, UL, data and an amount of queued UL data associated with the one or more access categories or TIDs;
determining (804) a resource unit, RU, allocation scheme based at least in part on the buffer status information received from the first STA (200);
allocating (806) a first set of RUs to the first STA (200) in accordance with the RU allocation scheme; and
receiving (808) at least some of the queued UL data from the first STA (200) via the first set of RUs;
wherein the buffer status information comprises a bitmap identifying the one or more access categories, one or more buffer state fields indicating an amount of queued UL data belonging to at least one of the identified access categories, and a quantization value;
wherein information provided in the one or more buffer state fields is quantized based on the quantization value; and
wherein the buffer status information further indicates a priority level of the queued UL data, wherein the priority level is based at least in part on quality of service, QoS, parameters, delay requirements, one or more access categories associated with the queued UL data, or one or more TIDs associated with the queued UL data.

2. The method (800) of claim 1, wherein the one or more buffer state fields comprises a respective buffer state field for each of the identified access categories.

3. The method (800) of claim 1, wherein the one or more buffer state fields comprises:
a first buffer state field indicating an amount of queued UL data belonging to a highest-priority access category among the identified access categories.

4. The method (800) of claim 3, wherein the one or more buffer state fields further comprises:
a second buffer state field indicating an amount of queued UL data belonging to any access categories other than the highest-priority access category.

5. The method (800) of claim 3, wherein the one or more buffer state fields further comprises:
a second buffer state field indicates an aggregate amount of queued UL data in the first STA.

6. The method (800) of claim 3, wherein the highest-priority access category is determined by the first STA (200).

7. The method (800) of claim 1, further comprising:
receiving, from a second STA, buffer status information indicating one or more access categories or TIDs for which the second STA has queued UL data and an amount of queued UL data associated with the one or more access categories or TIDs of the second STA, wherein the RU allocation scheme is further based at least in part on the buffer status information received from the second STA;
allocating a second set of RUs to the second STA in accordance with the RU allocation scheme; and
receiving at least some of the queued UL data from the second STA via the second set of RUs.

8. The method (800) of claim 1, further comprising:
transmitting a buffer status request, to the first STA, requesting the buffer status information, wherein at least one of the buffer status request or the buffer status information is provided in a high-efficiency aggregate control, HE A-Control, field of a data frame.

9. An access point, AP, (110) comprising:
one or more processors (330); and
a memory (340) storing instructions that, when executed by the one or more processors (330), cause the AP (110) to:
receive, from a wireless station, STA, (200) buffer status information indicating one or more access categories or traffic identifiers, TIDs, for which the STA has queued uplink, UL, data and an amount of queued UL data associated with the one or more access categories or TIDs;
determine a resource unit, RU, allocation scheme based at least in part on the buffer status information received from the STA (200);
allocate a first set of RUs to the STA (200) in accordance with the RU allocation scheme; and
receive at least some of the queued UL data from the STA (200) via the first set of RUs;
wherein the buffer status information comprises a bitmap identifying the one or more access categories, one or more buffer state fields indicating an amount of queued UL data belonging to at least one of the identified access categories, and a quantization value;
wherein information provided in the one or more buffer state fields is quantized based on the quantization value; and
wherein the buffer status information further indicates a priority level of the queued UL data, wherein the priority level is based at least in part on quality of service, QoS, parameters, delay requirements, one or more access categories associated with the queued UL data, or one or more TIDs associated with the queued UL data.

10. The AP (110) of claim 9 wherein the one or more buffer state fields comprises a respective buffer state field for each of the identified access categories.

11. The AP (110) of claim 9 wherein the one or more buffer state fields comprises:
a first buffer state field indicating an amount of queued UL data belonging to a highest-priority access category among the identified access categories; and
a second buffer state field indicating an amount of queued UL data belonging to any access categories other than the highest-priority access category.

12. The AP (110) of claim 9 wherein the one or more buffer state fields comprises:
a first buffer state field indicating an amount of queued UL data belonging to a highest-priority access category among the identified access categories; and
a second buffer state field indicating an aggregate amount of queued UL data in the STA (200).

13. The AP (110) of claim 9 wherein execution of the instructions further causes the AP to:
transmit a buffer status request, to the STA, requesting the buffer status information, wherein at least one of the buffer status request or the buffer status information is provided in a high-efficiency aggregate control, HE A-Control, field of a data frame.

14. A computer program comprising instructions to cause a computer to perform a method according to one of the claims 1 - 8, when executed thereon.

## Patentansprüche

1. Verfahren (800) zum Zuweisen von Ressourcen zu einer ersten drahtlosen Station, STA, (200) für Uplink-, UL, Übertragungen, umfassend:
Empfangen (802) von der ersten STA (200) von Pufferstatusinformationen, die eine oder mehrere Zugangskategorien oder Traffic-Identifizierer, TIDs, anzeigen, für welche die erste STA anstehenden Uplink-, UL, Daten und eine Menge von anstehenden UL-Daten hat, die mit der einen oder mehreren Zugangskategorien oder TIDs verknüpft sind;
Bestimmen (804) eines Ressourceneinheit-, RU, Zuweisungsschema basierend zumindest teilweise auf den von der ersten STA (200) empfangenen Pufferstatusinformationen;
Zuweisen (806) eines ersten Satzes von RUs an die erste STA (200) in Übereinstimmung mit dem RU-Zuweisungsschema; und
Empfangen (808) zumindest eines Teils der anstehenden UL-Daten von der ersten STA (200) über den ersten Satz von RUs;
wobei die Pufferstatusinformation eine Abbildung (Bitmap), die die eine oder mehrere Zugangskategorien identifiziert, ein oder mehrere Pufferstatusfelder, die eine Menge anstehender UL-Daten anzeigen, die zu mindestens einer der identifizierten Zugangskategorien gehören, und einen Quantisierungswert umfassen;
wobei Informationen, die in dem einen oder den mehreren Pufferstatusfeldern bereitgestellt werden, basierend auf dem Quantisierungswert quantisiert werden; und
wobei die Pufferstatusinformation ferner eine Prioritätsstufe der anstehenden UL-Daten anzeigt, wobei die Prioritätsstufe zumindest teilweise auf Servicequalität-, QoS, Parametern, Verzögerungsanforderungen, einer oder mehreren Zugangskategorien, die mit den anstehenden UL-Daten verknüpft sind oder einer oder mehreren TIDs, die mit den anstehenden UL-Daten verknüpft sind, basiert.

2. Verfahren (800) nach Anspruch 1, wobei das eine oder die mehreren Pufferstatusfelder ein entsprechendes Pufferstatusfeld für jede der identifizierten Zugangskategorien umfassen.

3. Verfahren (800) nach Anspruch 1, wobei das eine oder die mehreren Pufferstatusfelder umfassen:
ein erstes Pufferstatusfeld, das eine Menge der anstehenden UL-Daten anzeigt, die zu einer Zugangskategorie mit der höchsten Priorität unter den identifizierten Zugangskategorien gehören.

4. Verfahren (800) nach Anspruch 3, wobei das eine oder die mehreren Pufferstatusfelder ferner umfassen:
ein zweites Pufferstatusfeld, das eine Menge der anstehenden UL-Daten anzeigt, die zu irgendeiner anderen Zugangskategorie als der Zugangskategorie mit der höchsten Priorität gehören.

5. Verfahren (800) nach Anspruch 3, wobei das eine oder die mehreren Pufferstatusfelder ferner umfassen:
ein zweites Pufferstatusfeld, das eine Gesamtmenge der anstehenden UL-Daten in der ersten STA angibt.

6. Verfahren (800) nach Anspruch 3, wobei die Zugangskategorie mit der höchsten Priorität durch die erste STA (200) bestimmt wird.

7. Verfahren (800) von Anspruch 1, ferner umfassend:
Empfangen, von einer zweiten STA, von Pufferstatusinformationen, die eine oder mehrere Zugangskategorien oder TIDs anzeigen, für welche die zweite STA anstehende UL-Daten und einer Menge von anstehenden UL-Daten hat, die mit der einen oder den mehreren Zugangskategorien oder TIDs der zweiten STA verbunden sind, wobei das RU-Zuweisungsschema ferner zumindest teilweise auf den von der zweiten STA empfangenen Pufferstatusinformationen basiert;
Zuweisen eines zweiten Satzes von RUs an die zweite STA in Übereinstimmung mit dem RU-Zuweisungsschema; und
Empfangen zumindest eines Teils der anstehenden UL-Daten von der zweiten STA über den zweiten Satz von RUs.

8. Verfahren (800) nach Anspruch 1, ferner umfassend:
Senden einer Pufferstatusanforderung an die erste STA, die die Pufferstatusinformation anfordert, wobei mindestens eine der Pufferstatusanforderung oder die Pufferstatusinformationen in einem hocheffizienten Aggregatsteuerfeld, HE A-Control, eines Datenrahmens bereitgestellt wird.

9. Zugangspunkt, Access Point, AP, (110), umfassend:
einen oder mehrere Prozessoren (330); und
einen Speicher (340) zur Speicherung von Befehlen, die, wenn sie von einem oder mehreren Prozessoren (330) ausgeführt werden, den AP (110) dazu veranlassen:
Empfangen, von einer drahtlosen Station, STA, (200), von Pufferstatusinformationen, die eine oder mehrere Zugangskategorien oder Traffic-Identifizierer, TIDs, anzeigen, für welche die STA anstehende Uplink-, UL, Daten und eine Menge von anstehenden UL-Daten hat, die mit der einen oder mehreren Zugangskategorien oder TIDs verbunden sind;
Bestimmen eines eine Ressourceneinheit-, RU, Zuweisungsschema basierend zumindest teilweise auf den von der STA (200) empfangenen Pufferstatusinformationen;
Zuweisen eines ersten Satzes von RUs an die STA (200) in Übereinstimmung mit dem RU-Zuweisungsschema; und
Empfangen zumindest eines Teils der anstehenden UL-Daten von der STA (200) über den ersten Satz von RUs;
wobei die Pufferstatusinformation eine Abbildung (Bitmap), die eine oder mehrere Zugangskategorien identifiziert, ein oder mehrere Pufferstatusfelder, die eine Menge von anstehenden UL-Daten anzeigen, die zu mindestens einer der identifizierten Zugangskategorien gehören, und einen Quantisierungswert umfassen;
wobei Informationen, die in dem einen oder den mehreren Pufferstatusfelder bereitgestellt werden, basierend auf dem Quantisierungswert quantisiert werden; und
wobei die Pufferstatusinformation ferner eine Prioritätsstufe der anstehenden UL-Daten anzeigt, wobei die Prioritätsstufe zumindest teilweise auf Servicequalität-, QoS, Parametern, Verzögerungsanforderungen, einer oder mehreren Zugangskategorien, die mit den anstehenden UL-Daten verknüpft sind oder einer oder mehreren TIDs, die mit den anstehenden UL-Daten verknüpft sind, basiert.

10. AP (110) nach Anspruch 9, wobei das eine oder die mehreren Pufferstatusfelder ein entsprechendes Pufferzustandsfeld für jede der identifizierten Zugangskategorien umfassen.

11. AP (110) nach Anspruch 9, wobei das eine oder die mehreren Pufferstatusfelder ein entsprechendes Pufferstatusfeld umfassen:
ein erstes Pufferstatusfeld, das eine Menge von anstehenden UL-Daten anzeigt, die zu einer Zugangskategorie mit der höchsten Priorität unter den identifizierten Zugangskategorien gehören; und
ein zweites Pufferstatusfeld, das eine Menge von anstehenden UL-Daten anzeigt, die zu irgendeiner anderen Zugangskategorie als der Zugangskategorie mit der höchsten Priorität gehören.

12. AP (110) nach Anspruch 9, wobei das eine oder die mehreren Pufferstatusfelder umfassen:
ein erstes Pufferstatusfeld, das eine Menge von anstehenden UL-Daten anzeigt, die zu einer Zugangskategorie mit der höchsten Priorität unter den identifizierten Zugangskategorien gehören; und
ein zweites Pufferstatusfeld, das eine Gesamtmenge von anstehenden UL-Daten in der STA (200) anzeigt.

13. AP (110) nach Anspruch 9, wobei die Ausführung der Anweisungen den AP weiter veranlasst:
eine Pufferstatusanforderung an die STA zu senden, die die Pufferstatusinformation anfordert, wobei mindestens eine der Pufferstatusanforderung oder die Pufferstatusinformation in einem hocheffizienten Aggregatsteuerungsfeld, HE A-Control, eines Datenrahmens bereitgestellt wird.

14. Computerprogramm mit Befehlen, um einen Computer zu veranlassen, ein Verfahren nach einem der Ansprüche 1 bis 8 auszuführen, wenn es darauf ausgeführt wird.

## Revendications

1. Un procédé (800) d'allocation de ressources à une première station sans fil, STA, (200) pour des transmissions de liaison montante, UL, comprenant :
la réception (802), en provenance de la première STA (200), d'une information de statut de tampon indiquant une ou plusieurs catégories d'accès ou identifiants de trafic, TID, pour lesquels la première STA a des données de liaison montante, UL, mises en file d'attente et une quantité de données UL mises en file d'attente associées aux une ou plusieurs catégories d'accès ou TID ;
la détermination (804) d'un schéma d'allocation d'unité de ressource, RU, sur la base au moins en partie de l'information de statut de tampon reçue en provenance de la première STA (200) ;
l'allocation (806) d'un premier ensemble de RU à la première STA (200) conformément au schéma d'allocation RU ; et
la réception (808) d'au moins certaines des données UL mises en file d'attente en provenance de la première STA (200) via le premier ensemble de RU ;
dans lequel l'information de statut de tampon comprend un bitmap identifiant les une ou plusieurs catégories d'accès, un ou plusieurs champs d'état de tampon indiquant une quantité de données UL mises en file d'attente appartenant à au moins l'une des catégories d'accès identifiées, et une valeur de quantification ;
dans lequel une information fournie dans les un ou plusieurs champs d'état de tampon est quantifiée sur la base de la valeur de quantification ; et
dans lequel l'information de statut de tampon indique en outre un niveau de priorité des données UL mises en file d'attente, dans lequel le niveau de priorité est basé au moins en partie sur des paramètres de qualité de service, QoS, des exigences de délai, une ou plusieurs catégories d'accès associées aux données UL mises en file d'attente, ou un ou plusieurs TID associés aux données UL mises en file d'attente.

2. Le procédé (800) selon la revendication 1, dans lequel les un ou plusieurs champs d'état de tampon comprennent un champ d'état de tampon respectif pour chacune des catégories d'accès identifiées.

3. Le procédé (800) selon la revendication 1, dans lequel les un ou plusieurs champs d'état de tampon comprennent :
un premier champ d'état de tampon indiquant une quantité de données UL mises en file d'attente appartenant à une catégorie d'accès de priorité la plus élevée parmi les catégories d'accès identifiées.

4. Le procédé (800) selon la revendication 3, dans lequel les un ou plusieurs champs d'état de tampon comprennent en outre :
un second champ d'état de tampon indiquant une quantité de données UL mises en file d'attente appartenant à toutes catégories d'accès autres que la catégorie d'accès de priorité la plus élevée.

5. Le procédé (800) selon la revendication 3, dans lequel les un ou plusieurs champs d'état de tampon comprennent en outre :
un second champ d'état de tampon indiquant une quantité agrégée de données UL mises en file d'attente dans la première STA.

6. Le procédé (800) selon la revendication 3, dans lequel la catégorie d'accès de priorité la plus élevée est déterminée par la première STA (200).

7. Le procédé (800) selon la revendication 1, comprenant en outre :
la réception, en provenance d'une seconde STA, d'une information de statut de tampon indiquant une ou plusieurs catégories d'accès ou TID pour lesquels la seconde STA a des données UL mises en file d'attente et une quantité de données UL mises en file d'attente associées aux une ou plusieurs catégories d'accès ou TID de la seconde STA, dans lequel le schéma d'allocation RU est en outre basé au moins en partie sur l'information de statut de tampon reçue en provenance de la seconde STA ;
l'allocation d'un second ensemble de RU à la seconde STA conformément au schéma d'allocation RU ; et
la réception d'au moins certaines des données UL mises en file d'attente en provenance de la seconde STA via le second ensemble de RU.

8. Le procédé (800) selon la revendication 1, comprenant en outre :
la transmission d'une requête de statut de tampon, à la première STA, demandant l'information de statut de tampon, dans lequel au moins l'une de la requête de statut de tampon ou de l'information de statut de tampon est fournie dans un champ de contrôle agrégé à haute efficacité, HE A-Control, d'une trame de données.

9. Un point d'accès, AP, (110) comprenant :
un ou plusieurs processeurs (330) ; et
une mémoire (340) stockant des instructions qui, lorsqu'elles sont exécutées par les un ou plusieurs processeurs (330), amènent l'AP (110) à :
recevoir, en provenance d'une station sans fil, STA, (200), une information de statut de tampon indiquant une ou plusieurs catégories d'accès ou identifiants de trafic, TID, pour lesquels la STA a des données de liaison montante, UL, mises en file d'attente et une quantité de données UL mises en file d'attente associées aux une ou plusieurs catégories d'accès ou TID ;
déterminer un schéma d'allocation d'unité de ressource, RU, sur la base au moins en partie de l'information de statut de tampon reçue en provenance de la STA (200) ;
allouer un premier ensemble de RU à la STA (200) conformément au schéma d'allocation RU; et
recevoir au moins certaines des données UL mises en file d'attente en provenance de la STA (200) via le premier ensemble de RU ;
dans lequel l'information de statut de tampon comprend un bitmap identifiant les une ou plusieurs catégories d'accès, un ou plusieurs champs d'état de tampon indiquant une quantité de données UL mises en file d'attente appartenant à au moins l'une des catégories d'accès identifiées, et une valeur de quantification ;
dans lequel une information fournie dans les un ou plusieurs champs d'état de tampon est quantifiée sur la base de la valeur de quantification ; et
dans lequel l'information de statut de tampon indique en outre un niveau de priorité des données UL mises en file d'attente, dans lequel le niveau de priorité est basé au moins en partie sur des paramètres de qualité de service, QoS, des exigences de délai, une ou plusieurs catégories associées aux données UL mises en file d'attente, ou un ou plusieurs TID associés aux données UL mises en file d'attente.

10. L'AP (110) selon la revendication 9, dans lequel les un ou plusieurs champs d'état de tampon comprennent un champ d'état de tampon respectif pour chacune des catégories d'accès identifiées.

11. L'AP (110) selon la revendication 9, dans lequel les un ou plusieurs champs d'état de tampon comprennent :
un premier champ d'état de tampon indiquant une quantité de données UL mises en file d'attente appartenant à une catégorie d'accès de priorité la plus élevée parmi les catégories d'accès identifiées ; et
un second champ d'état de tampon indiquant une quantité de données UL mises en file d'attente appartenant à toutes catégories d'accès autres que la catégorie d'accès de priorité la plus élevée.

12. L'AP (110) selon la revendication 9, dans lequel les un ou plusieurs champs d'état de tampon comprennent :
un premier champ d'état de tampon indiquant une quantité de données UL mises en file d'attente appartenant à une catégorie d'accès de priorité la plus élevée parmi les catégories d'accès identifiées ; et
un second champ d'état de tampon indiquant une quantité agrégée de données UL mises en file d'attente dans la STA (200).

13. L'AP (110) selon la revendication 9, l'exécution des instructions amène en outre l'AP à :
transmettre une requête de statut de tampon, à la STA, demandant l'information de statut de tampon, dans lequel au moins l'une de la requête de statut de tampon ou de l'information de statut de tampon est fournie dans un champ de contrôle agrégé à haute efficacité, HE A-Control, d'une trame de données.

14. Un programme informatique comprenant des instructions pour amener un ordinateur à effectuer un procédé selon l'une des revendications 1 à 8, lorsqu'elles sont exécutées sur celui-ci.
